# EUROPEAN PATENT APPLICATION

(11) **EP 4 730 931 A1**
(43) Date of publication of application: **22.04.2026**
(21) Application number: 24843525.7
(22) Date of filing: 18.07.2024
(51) Int. Cl.: H05K 5/06, G06F 1/16, H04M 1/02, H05K 9/00

(54) **ELECTRONIC DEVICE COMPRISING WATERPROOFING STRUCTURE**

(30) Priority: 18.07.2023 KR 20230092959; 18.09.2023 KR 20230124269
(71) Applicant: Samsung Electronics Co., Ltd., Suwon-si, Gyeonggi-do 16677 (KR)
(72) Inventor: KIM, Byungjoon, Suwon-si, Gyeonggi-do 16677 (KR); KANG, Hyeonuk, Suwon-si, Gyeonggi-do 16677 (KR); KIM, Yongyoun, Suwon-si, Gyeonggi-do 16677 (KR); MIN, Byeonguk, Suwon-si, Gyeonggi-do 16677 (KR); OH, Chanhee, Suwon-si, Gyeonggi-do 16677 (KR); LEE, Kyungjae, Suwon-si, Gyeonggi-do 16677 (KR); CHO, Sungjoo, Suwon-si, Gyeonggi-do 16677 (KR); CHOI, Jaeseok, Suwon-si, Gyeonggi-do 16677 (KR)
(74) Representative: HGF
(86) International application number: PCT/KR2024/010370
(87) International publication number: WO 2025/018811

(57) **Abstract**

An electronic device according to various embodiments of the present invention may comprise: a front plate disposed in a first direction; a rear plate positioned in parallel with the front plate; a frame coupled to the front plate and the rear plate between the front plate and the rear plate so as to form an inner space; and a waterproof member for sealing between the front plate and the frame. The frame includes a waterproof member inlet formed such that the waterproof member is injected into the front plate in the first direction, and the waterproof member inlet can have a stepped part, which forms a difference in height from the front plate with respect to the first direction at an entrance part of the waterproof member inlet, and a seating surface, which is provided on the upper surface of a portion having a low height.

## Description

### [Technical Field]

Various embodiments disclosed in this document relate to an electronic device, and more particularly, to an electronic device including a waterproofing structure.

### [Background Art]

Electronic devices generally include a circuit board that provides placement space for electrical components and circuit wiring for electrical connections. As the functionality of electronic devices improves, the number of components that must be integrated onto the circuit board may increase. Furthermore, efficient utilization of space for the placement of the circuit board is required for the miniaturization and lightweight design of electronic devices.

An electronic device may have a housing made of metal. The metal housing can provide a ground path for the electronic device and can also be utilized as an antenna to enhance the wireless communication performance of the electronic device.

To prevent failure and enhance usability, the number of electronic devices providing a waterproofing function is increasing. Since the display of the electronic device is exposed on the front surface of the device and thus vulnerable to moisture, advanced waterproofing measures are required. Waterproofing of the display can be achieved, for example, by injecting a liquid waterproofing material between the display and the housing and then curing it.

### [Disclosure of Invention]

### [Solution to Problem]

As electronic devices perform wireless communication in various frequency bands, there is a requirement for increased ground current and decreased ground resistance in a circuit board where a wireless communication circuit is placed. However, increasing the ground current and decreasing the ground resistance require an increase in the area of a grounding circuit, which may increase the internal space occupied by the circuit board within the electronic device. In addition, the increased area of the circuit board may lead to a lack of placement space for various internal components of the electronic device, such as a vibration drive motor, a magnet, and/or sensors. Also, an injection port for a liquid waterproofing material is required for the waterproofing function, and this injection port may hinder the efficiency of utilizing the internal space of the electronic device.

Various embodiments disclosed in this document can provide an electronic device with improved utilization efficiency of internal space and enhanced wireless communication performance.

The technical problems to be solved in the disclosure are not limited to those mentioned above, and other technical problems not mentioned can be clearly understood from the description below by a person skilled in the technical field to which the disclosure belongs.

According to various embodiments of the disclosure, an electronic device may include a display; a housing including a frame formed to be coupled with the display in a first direction, and a rear plate coupled with the frame in a second direction opposite to the first direction; and a circuit board disposed inside the housing to have a first surface facing the first direction and a second surface facing the second direction. The frame may include a waterproofing member injection port through which a waterproofing member is injected in the first direction to seal between the display and the frame. The waterproofing member injection port may include an opening, a sidewall formed on an outer periphery of the opening, and a seating surface formed on at least a portion of a surface of the sidewall facing the second direction. The circuit board may include a substrate extension that at least partially overlaps with the seating surface of the waterproofing member injection port, as viewed in the second direction.

In various embodiments, the electronic device may further include a fastening member for securing the circuit board to the frame. The substrate extension may include a through-hole formed to allow the fastening member to pass through, and the waterproofing member injection port may include an engagement groove formed at the periphery of the opening to allow the fastening member to be engaged.

In various embodiments, the substrate extension may include a grounding pad formed to be grounded with respect to the frame.

In various embodiments, the grounding pad may be formed on a periphery of the through-hole.

In various embodiments, the electronic device may include a grounding washer positioned between the fastening member and the grounding pad, and electrically contacting the fastening member and the grounding pad by engagement of the fastening member to electrically connect the grounding pad and the fastening member.

In various embodiments, the frame may include an antenna formed on at least one metal frame.

The electronic device may include an RF circuit configured to supply power to the antenna, be disposed adjacent to the substrate extension, and be grounded through the grounding pad.

In various embodiments, the waterproofing member injection port may include a first portion that is a relatively high portion based on the first direction, and a second portion that is a relatively low portion, and the seating surface may be is formed on an upper surface of the second portion, and has a step formed by a height difference between the first portion and the second portion.

In various embodiments, the frame may have a polygonal shape, the waterproofing member injection port may be formed at an inner corner of the frame, and the step may be formed so that the second portion is positioned in a direction of at least one side of the polygonal shape of the frame.

In various embodiments, the waterproofing member may be eccentrically positioned toward the first portion within the waterproofing member injection port.

In various embodiments, the electronic device may further include a magnet located within the housing, and the magnet may extend onto the seating surface.

According to various embodiments of the disclosure, an electronic device may include a front plate disposed in a first direction, a rear plate positioned parallel to the front plate, and a frame coupled with the front plate and the rear plate and forming an internal space between the front plate and the rear plate. The frame may include a waterproofing member injection port formed to allow a waterproofing member for sealing a space between the front plate and the frame to be injected in the first direction. The waterproofing member injection port may include an opening, a step that forms a height difference from the front plate based on the first direction in the opening, and a seating surface provided on an upper surface of a portion having a low height.

In various embodiments, the electronic device may further include a substrate portion located in the internal space, and the substrate portion may include a substrate extension extending onto the seating surface.

In various embodiments, the substrate extension may include a grounding pad formed to be grounded with respect to the frame.

In various embodiments, the frame may include an antenna having at least one metal frame.

The substrate portion may include an RF circuit configured to supply power to the antenna, be disposed adjacent to the substrate extension, and be grounded through the grounding pad.

In various embodiments, the electronic device may further include a fastening member for securing the circuit board to the frame.

The substrate extension may include a through-hole formed to allow the fastening member to pass through, and the waterproofing member injection port may include an engagement groove formed to allow the fastening member to be engaged.

In various embodiments, the grounding pad may be formed on a periphery of the through-hole.

In various embodiments, the electronic device may include a grounding washer positioned between the fastening member and the grounding pad, and electrically contacting the fastening member and the grounding pad by engagement of the fastening member to electrically connect the grounding pad and the fastening member.

In various embodiments, the frame may have a polygonal shape, the waterproofing member injection port may be positioned adjacent to a corner of the polygonal shape of the frame in the internal space, and the step may be formed so that a height difference occurs in a direction in which one side of the polygonal shape of the frame extends.

In various embodiments, the waterproofing member may be eccentrically positioned in one direction within the waterproofing member injection port, and the step may be formed such that a portion of the waterproofing member injection port where the waterproofing member is eccentrically positioned has an increased height.

In various embodiments, the electronic device may further include a magnet located within the internal space, and the magnet may extend onto the seating surface.

According to various embodiments disclosed in this document, an electronic device can be provided in which the circuit board is extended to the upper surface of a waterproofing member injection port, thereby improving the efficiency of internal space utilization. In addition, a grounding circuit is arranged in the substrate extension and is connected to a grounding area located on the outer periphery of the waterproofing member injection port, thereby reducing the grounding resistance of the wireless communication circuit and improving the wireless communication performance.

In addition, the effects obtained from the present disclosure may not limit the class effects above, and other effects not mentioned may be clearly understood by those of ordinary skill in the art to which the present dis closure pertains from the following description.

### [Brief Description of Drawings]

In connection with the description of drawings, identical or similar reference numerals may be used for identical or similar components.
FIG. 1 is a block diagram of an electronic device in a network environment, according to various embodiments.
FIG. 2 is a diagram illustrating a foldable electronic device in an unfolded state, according to an embodiment.
FIG. 3 is a diagram illustrating a foldable electronic device in a folded state, according to an embodiment.
FIG. 4 is an exploded perspective view of a foldable electronic device in an unfolded state, according to an embodiment.
FIG. 5A is an enlarged plan view of an electronic device according to various embodiments.
FIG. 5B is a perspective view of an electronic device according to various embodiments.
FIG. 5C is a cross-sectional view of an electronic device according to various embodiments.
FIG. 5D is a cross-sectional view of a frame of an electronic device according to various embodiments.
FIG. 5E is a plan view of a frame of an electronic device according to various embodiments.
FIG. 6 is a graph illustrating the radiation efficiency of an electronic device according to an embodiment of the disclosure.
FIG. 7A is a plan view of an electronic device according to various embodiments.
FIG. 7B is a perspective view of an electronic device according to various embodiments.

### [Mode for the Invention]

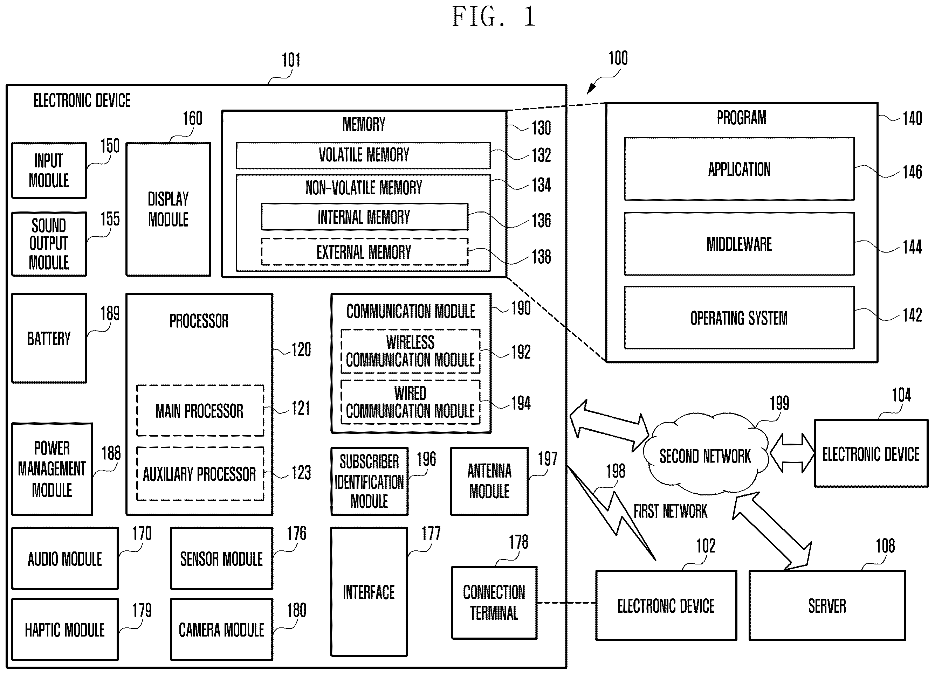

FIG. 1 is a block diagram of an electronic device 101 in a network environment 100, according to various embodiments. Referring to FIG. 1, the electronic device 101 in the network environment 100 may communicate with an external electronic device 102 via a first network 198 (e.g., a short-range wireless communication network), or at least one of an external electronic device 104 or a server 108 via a second network 199 (e.g., a long-range wireless communication network). According to an embodiment, the electronic device 101 may communicate with the external electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, and/or an antenna module 197. In some embodiments, at least one (e.g., the connecting terminal 178) of the above components may be omitted from the electronic device 101, or one or more other components may be added in the electronic device 101. In some embodiments, some (e.g., the sensor module 176, the camera module 180, or the antenna module 197) of the above components may be integrated into single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may load a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, if the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., a sleep) state, or together with the main processor 121 while the main processor 121 is in an active state (e.g., executing an application). According to an embodiment, the auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., a neural network processing device) may include a hardware structure specified for processing an artificial intelligence model. The artificial intelligence model may be created through machine learning. Such learning may be performed, for example, in the electronic device 101 itself on which the artificial intelligence model is performed, or may be performed through a separate server (e.g., the server 108). The learning algorithms may include, for example, supervised learning, unsupervised learning, semi-supervised learning, or reinforcement learning, but is not limited thereto. The artificial intelligence model may include a plurality of artificial neural network layers. The artificial neural network may be any of a deep neural network (DNN), a convolutional neural network (CNN), a recurrent neural network (RNN), a restricted Boltzmann machine (RBM), a deep belief network (DBN), a bidirectional recurrent DNN (BRDNN), a deep Q-network, or a combination of two or more of the above-mentioned networks, but is not limited the above-mentioned examples. In addition to the hardware structure, the artificial intelligence model may additionally or alternatively include a software structure.

The memory 130 may store various data used by at least one component (e.g., the processor 120 or the sensor module 176) of the electronic device 101. The data may include, for example, software (e.g., the program 140) and input data or output data for a command related thereto. The memory 130 may include the volatile memory 132 and/or the non-volatile memory 134.

The program 140 may be stored in the memory 130 as software, and may include, for example, an operating system (OS) 142, middleware 144, and/or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record, and the receiver may be used for incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., the electronic device 102) (e.g., a speaker or a headphone) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high-definition multimedia interface (HDMI), a universal serial bus (USB) interface, a secure digital (SD) card interface, and/or an audio interface.

The connecting terminal 178 may include a connector via which the electronic device 101 may be physically connected with the external electronic device (e.g., the external electronic device 102). According to an embodiment, the connecting terminal 178 may include, for example, an HDMI connector, a USB connector, an SD card connector, and/or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors (ISPs), or flashes.

The power management module 188 may manage power supplied to or consumed by the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, and/or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., the AP) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BLUETOOTH, wireless-fidelity (Wi-Fi) direct, or IR data association (IrDA)) or the second network 199 (e.g., a long-range communication network, such as a legacy cellular network, a 5^{th} generation (5G) network, a next generation communication network, the Internet, or a computer network (e.g., LAN or wide area network (WAN)). These various types of communication modules may be integrated into a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4^{th} generation (4G) network, and next-generation communication technology, e.g., new radio (NR) access technology. The NR access technology may support high-speed transmission of high-capacity data (i.e., enhanced mobile broadband (eMBB)), minimization of terminal power and connection of multiple terminals (massive machine type communications (mMTC)), or high reliability and low latency (ultra-reliable and low-latency communications (URLLC)). The wireless communication module 192 may support a high-frequency band (e.g., mmWave band) to achieve, for example, a high data transmission rate. The wireless communication module 192 may support various technologies for securing performance in a high-frequency band, such as beamforming, massive multiple-input and multiple-output (MIMO), full-dimensional MIMO (FD-MIMO), array antenna, analog beam-forming, or large-scale antenna. The wireless communication module 192 may support various requirements specified in the electronic device 101, an external electronic device (e.g., external the electronic device 104), or a network system (e.g., the second network 199). According to an embodiment, the wireless communication module 192 may support a peak data rate for implementing eMBB (e.g., 20 Gbps or more), loss coverage for implementing mMTC (e.g., 164 dB or less), or U-plane latency for realizing URLLC (e.g., 0.5 ms or less for each of downlink (DL) and uplink (UL) or 1 ms or less for round trip).

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., an antenna array). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to a certain embodiment, another component (e.g., a radio frequency integrated circuit (RFIC)) other than the radiating element may be additionally formed as part of the antenna module 197. According to various embodiments, the antenna module 197 may form a mmWave antenna module. According to an embodiment, the mmWave antenna module may include a PCB, an RFIC that is disposed on or adjacent to a first surface (e.g., the bottom surface) of the PCB and is capable of supporting a predetermined high-frequency band (e.g., a mmWave band), and a plurality of antennas (e.g., array antennas) that is disposed on or adjacent to a second surface (e.g., the top surface or the side surface) of the PCB and is capable of transmitting or receiving a signal of the predetermined high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide an ultra-low delay service using, for example, distributed computing or MEC. In another embodiment, the external electronic device 104 may include an internet of things (IoT) device. The server 108 may be an intelligent server using machine learning and/or neural networks. According to an embodiment of the disclosure, the external electronic device 104 or the server 108 may be included in the second network 199. The electronic device 101 may be applied to an intelligent service (e.g., smart home, smart city, smart car, or healthcare) based on 5G communication technology or loT-related technology.

An electronic device according to various embodiments of the disclosure may be one of various types of electronic devices. For example, the electronic device may include a portable communication device (e.g., a smartphone), a computer device, a portable multimedia device, a portable medical device, a camera, a wearable device, or a home appliance. However, the electronic device according to embodiments of the disclosure is not limited to any of those described above.

Various embodiments of the disclosure and the terms used herein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C" may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). If a certain element (e.g., a first element) is referred to, with or without the term "operatively" or "communicatively," as "coupled with", "coupled to", "connected with", or "connected to" another element (e.g., a second element), the element may be coupled with the other element directly (e.g., wiredly), wirelessly, or via a third element.

The term "module" used in various embodiments of the disclosure may include a unit implemented in hardware, software, or firmware, or any combination thereof, and may interchangeably be used with other terms, for example, logic, logic block, component, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

A method according to various embodiments set forth herein may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, the integrated component may perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

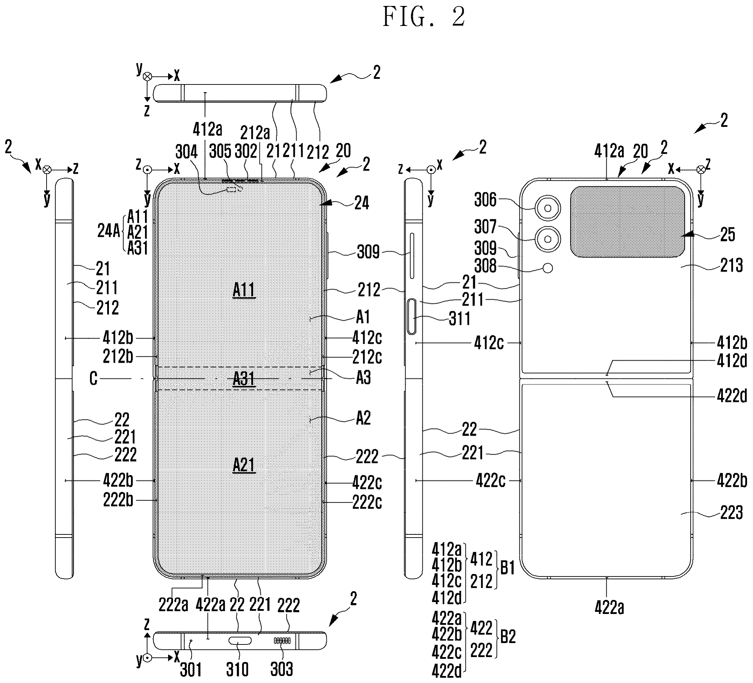

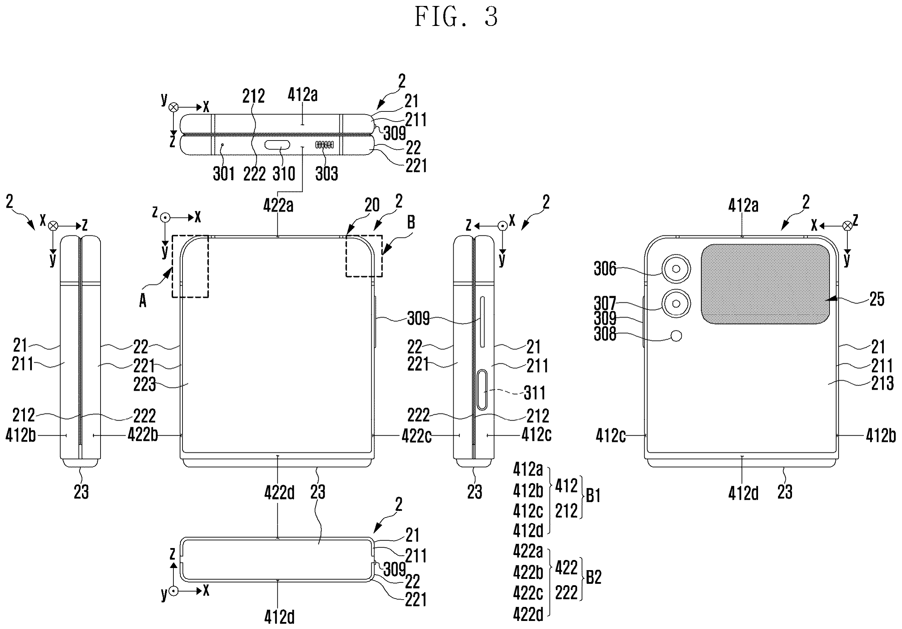

FIG. 2 is a diagram illustrating a foldable electronic device 2 in an unfolded state (or an unfolding state, a flat state), according to an embodiment. FIG. 3 is a diagram illustrating a foldable electronic device 2 in a folded state (or a folding state), according to an embodiment.

Referring to FIGS. 2 and 3, the foldable electronic device 2 may include a foldable housing 20, a first display module 24 (e.g., a flexible display module or a foldable display module), and/or a second display module 25. In various embodiments, the foldable electronic device 2 may be the electronic device 101 in FIG. 1.

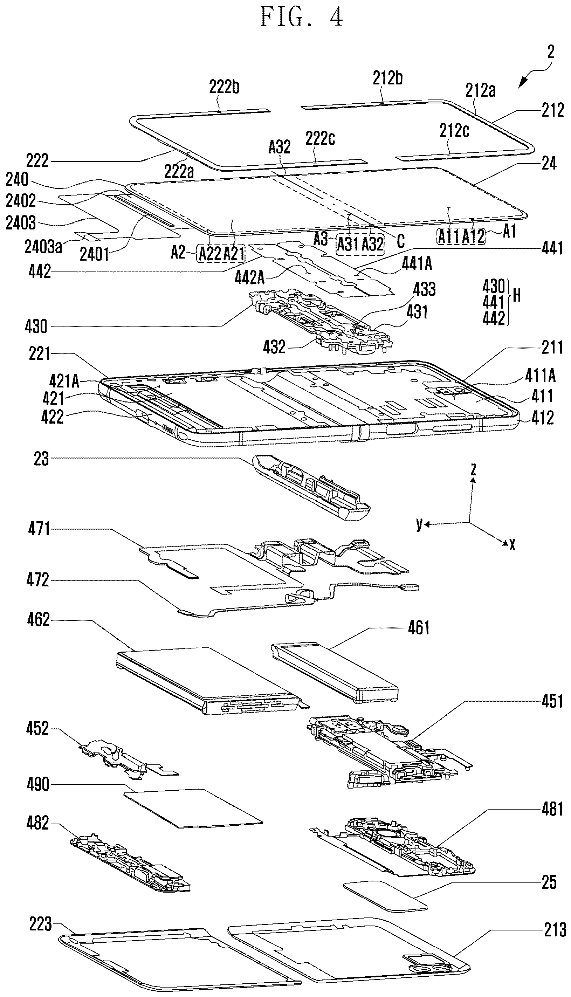

According to an embodiment, the foldable housing 20 may include a first housing 21 (or, a first housing portion or a first housing structure), a second housing 22 (or, a second housing portion or a second housing structure), a hinge housing 23, and/or a hinge portion. The first housing 21 and the second housing 22 may be connected via the hinge portion (e.g., the hinge portion H in FIG. 4) and may be rotatable relative to each other with respect to the hinge portion. The hinge portion may include one or more hinge modules (or hinge assemblies) (e.g., the hinge module 430 in FIG. 4).

According to an embodiment, the first display module 24 may include a first area A1, a second area A2, and a third area A3. The first area A1 may be positioned corresponding to the first housing 21. The second area A2 may be positioned corresponding to the second housing 22. The third area A3 may be a portion of the first display module 24 that connects the first area A1 and the second area A2. The third area A3 may be positioned corresponding to the hinge portion (e.g., the hinge portion H in FIG. 4).

According to an embodiment, the first area A1 is disposed in the first housing 21, and the shape of the first area A1 may be maintained by the support of the first housing 21. The second area A2 is disposed in the second housing 22, and the shape of the second area A2 may be maintained by the support of the second housing 22. The first area A1 and the second area A2 may be provided to be, for example, substantially flat. The unfolded state of the foldable electronic device 2 may be a state in which the third area A3 is substantially flat.

According to an embodiment, a display area 24A of the first display module 24 is an active area of the first display module 24 capable of displaying an image, and may include a first display area A11 (or, a first active area or a first screen area) provided by the first area A1, a second display area A21 (or, a second active area or a second screen area) provided by the second area A2, and a third display area A31 (or, a third active area or a third screen area) provided by the third area A3.

According to an embodiment, in the unfolded state of the foldable electronic device 2, the first area A1 and the second area A2 may form an angle of about 180 degrees, and the display area 24A including the first display area A11, the second display area A21, and the third display area A31 may be provided (or arranged) in a substantially flat form. In the unfolded state of the foldable electronic device 2, due to the relative positions between the first area A1 disposed in the first housing 21 and the second area A2 disposed in the second housing 22, the third area A3 connecting the first area A1 and the second area A2 may be disposed flat. In the unfolded state of the foldable electronic device 2, the third area A3 may be pulled on both sides by the first area A1 and the second area A2, and the pulling force may be provided to reduce damage to the third area A3 while making the third area A3 flat. In the unfolded state of the foldable electronic device 2, the third area A3 may be provided with an extended width that allows it to be disposed flat while reducing stress when pulled by the first area A1 and the second area A2.

The coordinate axes are illustrated based on the first housing 21, and it can be interpreted that, for example, the +z-axis direction is a direction in which the flat first display area A11 of the foldable electronic device 2 faces, the x-axis direction is a direction parallel to the center line C of the foldable electronic device 2, and the y-axis direction is a direction perpendicular to the center line C of the foldable electronic device 2.

According to an embodiment, in the unfolded state of the foldable electronic device 2, the hinge portion (e.g., the hinge portion H in FIG. 4) may support the third area A3. In the unfolded state of the foldable electronic device 2, when an external force (e.g., an external pressure such as a touch input using a user's finger or a touch input using an electronic pen) is applied to the third area A3, the hinge portion may contribute to maintaining the third area A3 flat by reducing its sagging. When an external shock is applied due to a reason such as dropping in the unfolded state of the foldable electronic device 2, the hinge portion may be configured to reduce the impact of the external shock on the third area A3. The hinge portion may support the third area A3 so that the third area A3 can be placed flat without sagging in the unfolded state of the foldable electronic device 2, thereby reducing the crease phenomenon.

According to an embodiment, the foldable electronic device 2 may be provided in an infolding manner that the display area 24A of the first display module 24 is folded inward. The surface of the foldable electronic device 2 on which the display area 24A of the first display module 24 is visible may be interpreted as the 'front surface of the foldable electronic device 2', and the surface of the foldable electronic device 2 facing in the opposite direction to the front surface of the foldable electronic device 2 may be interpreted as the 'rear surface of the foldable electronic device 2'. The foldable electronic device 2 may be configured such that the front surface or the first display module 24 can be folded inward.

According to an embodiment, FIG. 3 illustrates a fully folded state of the foldable electronic device 2 in which the first housing 21 and the second housing 22 are disposed so that they no longer come close to each other. In the fully folded state of the foldable electronic device 2, the first display area A11 and the second display area A21 may be positioned to face each other, and the third display area A31 (or the third area A3) may be arranged in a bent form. In the fully folded state of the foldable electronic device 2, the angle between the first housing 21 and the second housing 22 (or the angle between the first display area A11 and the second display area A21) may be about 0 degrees to about 10 degrees, and the display area 24A may be substantially invisible.

According to an embodiment, although not shown, an intermediate state of the foldable electronic device 2 may be a state between the unfolded state and the fully folded state, or a less folded state compared to the fully folded state. In the case of an intermediate state in which the angle between the first and second housings 21 and 22 is greater than a certain angle, a usage environment in which the user can use the display area 24A without substantial difficulty may be provided. Hereinafter, the 'folded state of the foldable electronic device 2' described in the disclosure may refer to the fully folded state in contrast to the intermediate state of the less folded state.

According to an embodiment, when viewing the unfolded state of the foldable electronic device 2, the display area 24A of the first display module 24 may be provided in a symmetrical form based on the center line C of the foldable electronic device 2. In the unfolded state of the foldable electronic device 2, the center line C may correspond to the middle of the width of the third display area A31 extending from the first boundary between the first and third display areas A11 and A31 to the second boundary between the second and third display areas A21 and A31. In the folded state of the foldable electronic device 2, the third display area A31 arranged in a bent form may have a substantially symmetrical shape with respect to the center line C of the foldable electronic device 2.

According to an embodiment, in the folded state of the foldable electronic device 2, the display area 24A of the first display module 24 may have a substantially rectangular shape.

According to an embodiment, the first area A1 of the first display module 24 may include the first display area A11 and a first border area (e.g., the first border area A12 in FIG. 4) extending from the first display area A11. The first border area may be covered by the first housing 21 and not exposed to the outside. The second area A2 of the first display module 24 may include the second display area A21 and a second border area (e.g., the second border area A22 in FIG. 4) extending from the second display area A21. The second border area may be covered by the second housing 22 and not exposed to the outside.

According to an embodiment, the third area A3 of the first display module 24 may include the third display area A31 and a third border area (e.g., the third border area A32 in FIG. 4) extending from the third display area A31. The third border area may be covered by a material (or member) disposed in the third border area and not exposed to the outside. The material disposed in the third border area may be exposed to the outside when the foldable electronic device 2 is in the unfolded state, and may provide a part of the appearance of the foldable electronic device 2. The material disposed in the third border area may include a flexible material that can reduce a decrease in the bendability of the third area A3, which is disposed in a bent form in the folded state of the foldable electronic device 2.

According to an embodiment, the first housing 21 may include a first frame 211 (or, a first frame structure or a first framework), a third frame 212 disposed on the first frame 211, and/or a first cover 213 disposed on the first frame 211.

According to an embodiment, the first frame 211 may include a first lateral area 412. The first lateral area 412 may be arranged at least in part along the edge of the first area A1 (or the first display area A11) of the first display module 24. e first lateral area 412 may provide at least a portion of the first side surface of the foldable electronic device 2 corresponding to the first area A1 (or the first display area A11) of the foldable electronic device 2.

According to an embodiment, the third frame 212 may cover a first border area (e.g., the first border area A12 in FIG. 4) included in the first area A1 of the first display module 24, and the first border area may not be exposed to the outside. The combination of the first lateral area 412 of the first frame 211 and the third frame 212 may provide a first bezel B1 (or, a first side, a first lateral portion, a first lateral structure, or a first lateral bezel structure) surrounding the first display area A11 of the first display module 24 when viewed from above the display area 24A of the foldable electronic device 2 in the unfolded state.

According to an embodiment, the first lateral area 412 of the first frame 211 may include a first partial lateral area 412a, a second partial lateral area 412b, a third partial lateral area 412c, and/or a seventh partial lateral area 412d. The first partial lateral area 412a and the seventh partial lateral area 412d may be substantially parallel to the center line C of the foldable electronic device 2. The first partial lateral area 412a and the seventh partial lateral area 412d are positioned spaced apart from each other in a direction (e.g., in the y-axis direction) perpendicular to the center line C of the foldable electronic device 2, and may be substantially parallel to each other. The seventh partial lateral area 412d may be positioned closer to the center line C of the foldable electronic device 2 than the first partial lateral area 412a. The seventh partial lateral area 412d may be positioned toward the rear surface of the foldable electronic device 2, and may not be visible because it is covered by the first display module 24 when viewed from above the display area 24A of the foldable electronic device 2 in the unfolded state. The second partial lateral area 412b may connect one end of the first partial lateral area 412a and one end of the seventh partial lateral area 412d, and may be substantially perpendicular to the center line C of the foldable electronic device 2. The third partial lateral area 412c may connect the other end of the first partial lateral area 412a and the other end of the seventh partial lateral area 412d, and may be substantially parallel to the second partial lateral area 412b.

According to an embodiment, a first corner where the first partial lateral area 412a and the second partial lateral area 412b are connected, and a second corner where the first partial lateral area 412a and the third partial lateral area 412c are connected may be provided in a rounded or curved shape.

According to an embodiment, the third frame 212 may include a first frame area 212a corresponding to the first partial lateral area 412a of the first frame 211, a second frame area 212b corresponding to the second partial lateral area 412b of the first frame 211, and a third frame area 212c corresponding to the third partial lateral area 412c of the first frame 211. When viewed from above the first display area A11, the first frame area 212a may be substantially parallel to the center line C of the foldable electronic device 2. When viewed from above the first display area A11, the second frame area 212b and the third frame area 212c may be positioned spaced apart from each other in the direction (e.g., the x-axis direction) of the center line C of the foldable electronic device 2 and may be substantially parallel to each other. The third frame 212 may include a first corner frame area where the first frame area 212a and the second frame area 212b are connected, corresponding to the first corner where the first partial lateral area 412a and the second partial lateral area 412b are connected. The third frame 212 may include a second corner frame area where the first frame area 212a and the third frame area 212c are connected, corresponding to the second corner where the first partial lateral area 412a and the third partial lateral area 412c are connected.

According to an embodiment, the second frame area 212b and the third frame area 212c of the third frame 212 may not extend to the third border area A32 (see FIG. 4) of the third area A3 so as not to interfere (or hinder) the third area A3 of the first display module 24 from being disposed in a bent form when the foldable electronic device 2 transitions from the unfolded state to the folded state.

According to various embodiments, the third frame 212 may be interpreted as a separate element from the first housing 21.

According to an embodiment, the first frame 211 may include a first support portion (e.g., the first support portion 411 in FIG. 4) extending from or connected to the first lateral area 412. The first area A1 of the first display module 24 may be disposed on the first support portion, and the first support portion may support the first area A1. The first area A1 and the first cover 213 may be positioned on opposite sides with the first support portion of the first frame 211 interposed therebetween. The first lateral area 412 of the first frame 211 may be disposed to at least partially surround a space between the first area A1 of the first display module 24 and the first cover 213. The first display area A11 of the first area A1 may provide one surface (e.g., the first front surface or the first front surface area) of the outer surfaces of the foldable electronic device 2, and the first cover 213 may provide other surface (e.g., the first rear surface or the second rear surface area) of the outer surfaces of the foldable electronic device 2 that faces substantially in the opposite direction to the first display area A11. The first cover 213 is an element that provides a first rear surface corresponding to the first housing 21, of the rear surface of the foldable electronic device 2, and may be referred to as a 'first back cover'. Various electrical components (or electronic components), such as a printed circuit board or a battery, may be disposed on the first support portion between the first support portion of the first frame 211 and the first cover 213.

According to an embodiment, the second housing 22 may include a second frame 221 (or, a second frame structure or a second framework), a fourth frame 222 disposed on the second frame 221, and/or a second cover 223 disposed on the second frame 221.

According to an embodiment, the second frame 221 may include a second lateral area 422. The second lateral area 422 may be disposed at least in part along the edge of the second area A2 (or the second display area A21) of the first display module 24. The second lateral area 422 may provide at least a portion of the second side surface of the foldable electronic device 2 corresponding to the second area A2 (or the second display area A21) of the foldable electronic device 2.

According to an embodiment, the fourth frame 222 may cover a second border area (e.g., the second border area A22 in FIG. 4) included in the second area A2 of the first display module 24, and the second border area may not be exposed to the outside. The combination of the second lateral area 422 of the second frame 221 and the fourth frame 222 may provide a second bezel B2 (or, a second side, a second lateral portion, a second lateral structure, or a second lateral bezel structure) surrounding the second display area A21 of the first display module 24 when viewed from above the display area 24A of the foldable electronic device 2 in the unfolded state.

According to an embodiment, the second lateral area 422 of the second frame 221 may include a fourth partial lateral area 422a, a fifth partial lateral area 422b, a sixth partial lateral area 422c, and/or an eighth partial lateral area 422d. The fourth partial lateral area 422a and the eighth partial lateral area 422d may be substantially parallel to the center line C of the foldable electronic device 2. The fourth partial lateral area 422a and the eighth partial lateral area 422d may be positioned spaced apart from each other in a direction (e.g., in the y-axis direction) perpendicular to the center line C of the foldable electronic device 2 and may be substantially parallel to each other. The eighth partial lateral area 422d may be positioned closer to the center line C of the foldable electronic device 2 than the fourth partial lateral area 422a. The eighth partial lateral area 422d may be positioned toward the rear surface of the foldable electronic device 2, and may not be visible because it is covered by the first display module 24 when viewed from above the display area 24A of the foldable electronic device 2 in the unfolded state. The fifth partial lateral area 422b may connect one end of the fourth partial lateral area 422a and one end of the eighth partial lateral area 422d, and may be substantially perpendicular to the center line C of the foldable electronic device 2. The sixth partial lateral area 422c may connect the other end of the fourth partial lateral area 422a and the other end of the eighth partial lateral area 422d, and may be substantially parallel to the fifth partial lateral area 422b.

According to an embodiment, a third corner where the fourth partial lateral area 422a and the fifth partial lateral area 422b are connected, and a fourth corner where the fourth partial lateral area 422a and the sixth partial lateral area 422c are connected may be provided in a rounded or curved shape.

According to an embodiment, the fourth frame 222 may include a fourth frame area 222a corresponding to the fourth partial lateral area 422a of the second frame 221, a fifth frame area 222b corresponding to the fifth partial lateral area 422b of the second frame 221, and a sixth frame area 222c corresponding to the sixth partial lateral area 422c of the second frame 221. When viewed from above the second display area A21, the fourth frame area 222a may be substantially parallel to the center line C of the foldable electronic device 2. When viewed from above the second display area A21, the fifth frame area 222b and the sixth frame area 222c may be positioned spaced apart from each other in the direction (e.g., the x-axis direction) of the center line C of the foldable electronic device 2 and may be substantially parallel to each other. The fourth frame 222 may include a third corner frame area where the fourth frame area 222a and the fifth frame area 222b are connected, corresponding to the third corner where the fourth partial lateral area 422a and the fifth partial lateral area 422b are connected. The fourth frame 222 may include a fourth corner frame area where the fourth frame area 222a and the sixth frame area 222c are connected, corresponding to the fourth corner where the fourth partial lateral area 422a and the sixth partial lateral area 422c are connected.

According to an embodiment, the fifth frame area 222b and the sixth frame area 222c of the fourth frame 222 may not extend to the third border area A32 (see FIG. 4) of the third area A3 so as not to interfere (or hinder) the third area A3 of the first display module 24 from being disposed in a bent form when the foldable electronic device 2 transitions from the unfolded state to the folded state.

According to various embodiments, the fourth frame 222 may be interpreted as a separate element from the second housing 22.

According to an embodiment, the second frame 221 may include a second support portion (e.g., the second support portion 421 in FIG. 4) extending from or connected to the second lateral area 422. The second area A2 of the first display module 24 may be disposed on the second support portion, and the second support portion may support the second area A2. The second area A2 and the second cover 223 may be positioned on opposite sides with the second support portion of the second frame 221 interposed therebetween. The second lateral area 422 of the second frame 221 may be disposed to at least partially surround a space between the second area A2 of the first display module 24 and the second cover 223. The second display area A21 of the second area A2 may provide one surface (e.g., the second front surface or the second front surface area) of the outer surfaces of the foldable electronic device 2, and the second cover 223 may provide the other surface (e.g., the second rear surface or the second rear surface area) of the outer surfaces of the foldable electronic device 2 that faces substantially in the opposite direction to the second display area A21. The second cover 223 is an element that provides a second rear surface corresponding to the second housing 22, of the rear surface of the foldable electronic device 2, and may be referred to as a 'second back cover'. Various electrical components (or electronic components), such as a printed circuit board or a battery, may be disposed on the second support portion between the second support portion of the second frame 221 and the second cover 223.

According to an embodiment, in the folded state of the foldable electronic device 2, the first bezel B1 of the first housing 21 and the second bezel B2 of the second housing 22 may overlap and be aligned with each other.

According to an embodiment, in the folded state of the foldable electronic device 2, the third frame 212 of the first bezel B1 and the fourth frame 222 of the second bezel B2 may overlap and be aligned with each other. In the folded state of the foldable electronic device 2, the first frame area 212a of the third frame 212 and the fourth frame area 222a of the fourth frame 222 may overlap and be aligned with each other. In the folded state of the foldable electronic device 2, the second frame area 212b of the third frame 212 and the fifth frame area 222b of the fourth frame 222 may overlap and be aligned with each other. In the folded state of the foldable electronic device 2, the third frame area 212c of the third frame 212 and the sixth frame area 222c of the fourth frame 222 may overlap and be aligned with each other.

According to various embodiments, the third frame 212 and/or the fourth frame 222 may include a buffering material or a flexible material to alleviate a collision between the first housing 21 and the second housing 22 when the foldable electronic device 2 transitions from the unfolded state to the folded state.

According to an embodiment, the hinge housing 23 (or hinge cover) may be coupled with a hinge module (e.g., the hinge module 430 in FIG. 4). When the foldable electronic device 2 transitions from the unfolded state to the folded state, due to a change in the relative position between the first frame 211 and the second frame 221 connected to each other through a hinge portion (e.g., the hinge portion H in FIG. 4) and a change in the state of the hinge module (e.g., the hinge module 430 in FIG. 4) coupled with the hinge housing 23, a gap between the seventh partial lateral area 412d included in the first lateral area 412 of the first frame 211 and the eighth partial lateral area 422d included in the second lateral area 422 of the second frame 221 is opened on the opposite side of the third display area A31 of the first display module 24, and the hinge housing 23 may be exposed to the outside through the opened gap. When the foldable electronic device 2 transitions from the folded state to the unfolded state, due to a change in the relative position between the first frame 211 and the second frame 221 connected to each other through the hinge portion, and a change in the state of the hinge module coupled with the hinge housing 23, the gap between the seventh partial lateral area 412d included in the first lateral area 412 of the first frame 211 and the eighth partial lateral area 422d included in the second lateral area 422 of the second frame 221 is closed on the opposite side of the third display area A31 of the first display module 24, and the hinge housing 23 may be positioned in the internal space resulting from the combination of the first frame 211 and the second frame 221 and not be exposed to the outside.

According to an embodiment, the second display module 25 may be disposed in a different direction from the first display module 24. The second display module 25 may provide, for example, a display area (or screen area) facing in the opposite direction to the first display area A11 of the first display module 24. In an embodiment, the first cover 213 may include a light-transmitting area (or opening) provided corresponding to the second display module 25, and the second display module 25 may be visible through the light-transmitting area of the first cover 213. The second display module 25 may be provided in a form in which a transparent cover (a transparent plate that covers and protects the display, for example, a window) is omitted, and may be coupled with the first cover 213 through an optically transparent adhesive material (e.g., an optical clear adhesive (OCA), an optical clear resin (OCR), or a super view resin (SVR)).

According to an embodiment, the foldable electronic device 2 may be configured to display an image through the second display module 25 instead of the first display module 24 in the folded state.

According to various embodiments, the first cover 213 may include an opening, and the second display module 25 may be positioned in the opening of the first cover 213. A portion of the appearance of the foldable electronic device 2 may be provided by a transparent cover (a transparent plate that covers and protects the display, for example, a window) of the second display module 25.

According to an embodiment, the foldable electronic device 2 may include one or more audio input modules (e.g., the input module 150 in FIG. 1), one or more audio output modules (e.g., the sound output module 155 in FIG. 1), one or more sensor modules (e.g., the sensor module 176 in FIG. 1), one or more camera modules (e.g., a first camera module 305, a second camera module 306, and a third camera module 307), one or more light-emitting modules (e.g., a light-emitting module 308), one or more connecting terminals (e.g., a first connecting terminal 310 and a second connecting terminal 311), and/or one or more key input modules (e.g., the input module 150 in FIG. 1). In various embodiments, the foldable electronic device 2 may omit at least one of the components or additionally include another component. The location or number of components included in the foldable electronic device 2 is not limited to the illustrated example and may vary.

According to an embodiment, one or more of the audio input modules may include a microphone (not shown separately) positioned inside the foldable electronic device 2 to correspond to a microphone hole 301 provided on the appearance (e.g., the second side surface) of the foldable electronic device 2. The location or number of microphones and the corresponding microphone holes 301 is not limited to the illustrated example and may vary.

According to an embodiment, any one of the one or more audio output modules may include a first speaker for calling (e.g., a call receiver) (not shown separately) positioned inside the foldable electronic device 2 to correspond to a first speaker hole 302 provided on the appearance (e.g., the first front surface) of the foldable electronic device 2. Any one of the one or more audio output modules may include a second speaker (not shown separately) for multimedia playback (or recording playback) positioned inside the foldable electronic device 2 to correspond to a second speaker hole 303 provided on the appearance (e.g., the second side surface) of the foldable electronic device 2. The location or number of the first speaker and the corresponding first speaker hole 302 is not limited to the illustrated example and may vary. The location or number of the second speaker and the corresponding second speaker hole 303 is not limited to the illustrated example and may vary.

According to various embodiments, the first speaker may include a piezo speaker, and the first speaker hole 302 may be omitted. In various embodiments, the second speaker may include a piezo speaker, and the second speaker hole 303 may be omitted.

According to various embodiments, a single hole may be provided (not shown separately) to replace the microphone hole 301 and the speaker hole (e.g., the first speaker hole 302 or the second speaker hole 303).

According to an embodiment, one of the one or more sensor modules may include an optical sensor 304 (e.g., a proximity sensor or an illuminance sensor) positioned inside the electronic device 2 to correspond to the appearance (e.g., the first front surface) of the foldable electronic device 2. The optical sensor 304 may be aligned with an opening provided in the flexible display of the first display module 24. In various embodiments, the optical sensor 304 may be at least partially inserted into the opening of the flexible display. External light may reach the optical sensor 304 through a transparent cover (e.g., a flexible transparent plate that covers and protects the flexible display, for example, a window) of the first display module 24 and the opening of the flexible display. The opening of the flexible display may be a through hole or a notch (not shown separately).

According to various embodiments, the optical sensor 304 may be positioned on the rear surface of the first display area A11 or below or beneath the first display area A11. The optical sensor 304, or the position of the optical sensor 304, may not be visually distinguished (or exposed). In various embodiments, the optical sensor 304 may be positioned in and aligned with a recess provided on the rear surface of the first display area A11. In various embodiments, the optical sensor 304 may be at least partially inserted into the recess of the first display area A11. The optical sensor 304 may overlap with the first display area A11 when viewed from above the first display area A11. The optical sensor 304 may perform a sensing function without being visually exposed.

According to various embodiments, a portion of the first display area A11 that at least partially overlaps with the optical sensor 304 may include a pixel structure and/or wiring structure different from the other portion of the first display area A11. For example, a portion of the first display area A11 that at least partially overlaps with the optical sensor 304 may have a pixel density (e.g., number of pixels per unit area) different from the other portion of the first display area A11. In various embodiments, a portion of the first display area A11 that at least partially overlaps with the optical sensor 304 may not have a plurality of pixels arranged therein.

According to various embodiments, the location or number of the optical sensor 304 may vary and is not limited to the illustrated example.

According to various embodiments, the foldable electronic device 2 may include a biometric sensor (e.g., a fingerprint sensor) (not shown separately) positioned on the rear surface of the display area 24A or below or beneath the display area 24A. The biometric sensor may be implemented as an optical sensor, a capacitive sensor, or an ultrasonic sensor, and the location or number thereof may vary.

According to an embodiment, one or more camera modules may include a first camera module 305, a second camera module 306, and/or a third camera module 307. The first camera module 305 (e.g., a front camera module) may be located inside the foldable electronic device 2 to correspond to the front surface (e.g., the first front surface) of the foldable electronic device 2. The second camera module 306 (e.g., a first rear camera module) and the third camera module 307 (e.g., a second rear camera module) may be positioned inside the foldable electronic device 2 to correspond to the rear surface (e.g., the first rear surface) of the foldable electronic device 2. In an embodiment, the first camera module 305, the second camera module 306, and the third camera module 307 may be positioned in the first housing 21.

According to an embodiment, the first camera module 305 may be aligned with an opening provided in the flexible display of the first display module 24. According to various embodiments, the first camera module 305 may be at least partially inserted into the opening of the flexible display. External light can reach the optical sensor 304 through a transparent cover (e.g., a flexible transparent plate that covers and protects the flexible display, for example, a window) of the first display module 24 and the opening of the flexible display. The opening of the flexible display may be a through hole or a notch (not shown separately).

According to various embodiments, the first camera module 305 may be positioned on the rear surface of the first display area A11 or below or beneath the first display area A11. The first camera module 305 may include, for example, a hidden display rear camera (e.g., an under-display camera (UDC)). In various embodiments, the first camera module 305 may be aligned with and positioned in a recess provided on the rear surface of the first display area A11. According to various embodiments, the first camera module 305 may be at least partially inserted into the recess of the first display area A11. Since the first camera module 305 is disposed to overlap with at least a portion of the first display area A11, it can acquire an image of an external subject without being visually exposed to the outside.

According to various embodiments, a portion of the first display area A11 that at least partially overlaps with the first camera module 305 may include a pixel structure and/or wiring structure different from other portions. For example, a portion of the first display area A11 that at least partially overlaps with the first camera module 305 may have a pixel density (e.g., number of pixels per unit area) different from the other portion of the first display area A11. A pixel structure and/or wiring structure disposed in a portion of the first display area A11 that at least partially overlaps with the first camera module 305 may reduce light loss between the outside and the first camera module 305. In various embodiments, a portion of the first display area A11 that at least partially overlaps with the first camera module 305 may not have pixels disposed therein.

According to various embodiments, the second camera module 306 or the third camera module 307 may include lenses having different angles of view. The electronic device 2 may be implemented to change, based on a user's selection, the angle of view of the second camera module 306 or the third camera module 307 operated by the electronic device 2.

According to various embodiments, the second camera module 306 and the third camera module 307 may have different properties (e.g., angles of view) or functions. The second camera module 306 or the third camera module 307 may include a wide-angle camera, a telephoto camera, a color camera, a monochrome camera, or an infrared (IR) camera (e.g., a time of flight (TOF) camera, a structured light camera). In some embodiment, the IR camera may be operated as at least a part of a sensor module.

According to an embodiment, the light-emitting module 308 may be positioned inside the foldable electronic device 2 to correspond to the rear surface (e.g., the first rear surface) of the foldable electronic device 2. The light-emitting module 308 may be positioned in the first housing 21 to correspond to the first cover 213. The light-emitting module 308 may operate as a light source for the second camera module 306 or the third camera module 307.

According to an embodiment, any one of the one or more connecting terminals may include a first connector (or first interface terminal) (not shown separately) positioned inside the foldable electronic device 2 to correspond to a first connector hole 310 formed on the appearance (e.g., the second side surface) of the foldable electronic device 2. The first connector may be, for example, a universal serial bus (USB) connector or a high definition multimedia interface (HDMI) connector. The foldable electronic device 2 may transmit and/or receive data and/or power to/from an external electronic device electrically connected to the first connector. The location or number of the first connector and the corresponding first connector hole 310 is not limited to the illustrated example and may vary.

According to an embodiment, any one of the one or more connecting terminals may include a second connector (or second interface terminal) (not shown separately) positioned inside the foldable electronic device 2 to correspond to a second connector hole formed on the appearance (e.g., the first side surface) of the foldable electronic device 2. For example, an external storage medium (e.g., a subscriber identity module (SIM) card or a memory card such as a secure digital memory (SD) card) may be connected to the second connector. The second connector hole may be covered by a cover 311.

According to an embodiment, the one or more key input modules may include a key 309 located on the appearance (e.g., the first side surface) of the foldable electronic device 2 and a key signal generator located inside the foldable electronic device 2 to correspond to the key 309. The location or number of the key 309 is not limited to the illustrated example and may vary.

According to various embodiments, the foldable electronic device 2 may include a detachable pen input device (e.g., an electronic pen, a digital pen, or a stylus pen) (not shown separately). The pen input device may be implemented so as to be inserted into the internal space of, for example, the first housing 21 or the second housing 22. In another example, the pen input device may be detachably attached to the hinge housing 23. The hinge housing 23 may include a recess, and the pen input device may be inserted into the recess.

The foldable electronic device 2 may further include various components depending on its provision form. These components may vary in modification with the convergence trend of the foldable electronic device 2, and thus cannot all be listed. However, components equivalent to the aforementioned components may be additionally included in the foldable electronic device 2. In various embodiments, depending on the provision form, certain components may be excluded from the aforementioned components or replaced with other components.

FIG. 4 is an exploded perspective view of a foldable electronic device 2 in an unfolded state, according to an embodiment.

Referring to FIG. 4, the foldable electronic device 2 may include a first frame 211, a third frame 212, a first cover 213, a second frame 221, a fourth frame 222, a second cover 223, a hinge cover 23, a first display module 24, a second display module 25, a hinge portion H, a first printed circuit board 451, a second printed circuit board 452, a first battery 461, a second battery 462, a second flexible printed circuit board 471, a third flexible printed circuit board 472, a first internal support 481, a second internal support 482, and/or an antenna structure 490.

According to an embodiment, the first frame 211 may include a first support portion 411 and a first lateral area 412. The first frame 211 may be provided, for example, in an integral form including the first support portion 411 and the first lateral area 412. The first support portion 411 is an internal structure positioned inside the foldable electronic device 2 to correspond to the first housing 21, and may be referred to as various other terms such as a 'first bracket', a 'first support body', a 'first support member', or a 'first support structure'.

According to an embodiment, the second frame 221 may include a second support portion 421 and a second lateral area 422. The second frame 221 may be provided, for example, in an integral form including the second support portion 421 and the second lateral area 422. The second support portion 421 is an internal structure positioned inside the foldable electronic device 2 to correspond to the second housing 22, and may be referred to as various other terms such as a 'second bracket', a 'second support body', a 'second support member', or a 'second support structure'.

According to an embodiment, at least a portion of the first frame 211 and/or at least a portion of the second frame 221 may be formed of a metallic material and/or a non-metallic material (e.g., a polymer). Electrical components (or electronic components) or various members related to electrical components may be disposed on the first frame 211 or the first support portion 411, or may be supported by the first frame 211 or the first support portion 411. The first support portion 411 may include a first support area, and a third support area (not shown) facing substantially in the opposite direction from the first support area 411A. The first area A1 of the first display module 24 may be disposed in the first support area 411A of the first support portion 411. Various components, such as the first printed circuit board 451 or the first battery 461, may be disposed in the third support area. The second support portion 421 may include a second support area 421A and a fourth support area (e.g., the fourth support area 421B in FIG. 13) facing substantially in the opposite direction from the second support area 421A. The second area A2 of the first display module 24 may be disposed in the second support area 421A of the second support portion 421. Various components, such as the second printed circuit board 452 or the second battery 462, may be disposed in the fourth support area.

According to an embodiment, the first display area A1 may be disposed on the first support portion 411 and the second display area A2 may be disposed on the second support portion 421 through various adhesive materials (or bonding materials) such as a heat-responsive adhesive material (or heat-responsive bonding material), a photo-responsive adhesive material (or photo-responsive bonding material), a general adhesive material (or general bonding material), and/or a double-sided tape.

According to an embodiment, the first area A1 of the first display module 24 may include a first display area A11 and a first border area A12. The second area A2 of the first display module 24 may include a second display area A21 and a second border area A22. The third area A3 of the first display module 24 may include a third display area A31 and a third border area A32.

According to an embodiment, the third frame 212 may be disposed on or coupled with the first frame 211. The third frame 212 may cover the first border area A12 included in the first area A1 of the first display module 24, and the first border area A12 may not be exposed to the outside. The third frame 212 may include a first frame area 212a, a second frame area 212b, and/or a third frame area 212c. The first border area A12 included in the first area A1 of the first display module 24 may include a first partial border area corresponding to the first frame area 212a, a second partial border area corresponding to the second frame area 212b, and/or a third partial border area corresponding to the third frame area 212c.

According to an embodiment, the fourth frame 222 may be disposed on or coupled with the second frame 221. The fourth frame 222 may cover the second border area A22 included in the second area A2 of the first display module 24, and the second border area A22 may not be exposed to the outside. The fourth frame 222 may include a fourth frame area 222a, a fifth frame area 222b, and/or a sixth frame area 222c. The second border area A22 included in the second area A2 of the first display module 24 may include a fourth partial border area corresponding to the fourth frame area 222a, a fifth partial border area corresponding to the fifth frame area 222b, and/or a sixth partial border area corresponding to the sixth frame area 222c.

According to an embodiment, the third frame 212 and/or the fourth frame 222 may include a non-conductive material (e.g., a non-metallic material).

According to various embodiments, the third frame 212 and/or the fourth frame 222 may include a conductive material (or a metallic material).

According to an embodiment, the hinge portion H may include a hinge module 430, a first plate 441 (or a first wing plate), and/or a second plate 442 (or a second wing plate).

According to an embodiment, the hinge module 430 may include a first bracket 431, a second bracket 432, and/or a bracket connecting portion 433. The first bracket 431 may be disposed in or coupled with the first support area 411A of the first frame 211, for example, through screw fastening. The second bracket 432 may be disposed in or coupled with the second support area 421A of the second frame 221, for example, through screw fastening. The bracket connecting portion 433 may connect the first bracket 431 and the second bracket 432. The first bracket 431 and the second bracket 432 may be rotatable with respect to the bracket connecting portion 433.

According to an embodiment, the bracket connecting portion 433 of the hinge module 430 may be configured such that the first frame 211 to which the first bracket 431 is fixed and the second frame 221 to which the second bracket 432 is fixed may rotate at the same angle in opposite directions. The bracket connecting portion 433 may be configured such that the first frame 211 to which the first bracket 431 is fixed and the second frame 221 to which the second bracket 432 is fixed may rotate and remain at one or more specified angles. The bracket connecting portion 433 may have, for example, a free-stop function. The bracket connecting portion 433 may be configured to provide a force that allows the first frame 211 to which the first bracket 431 is fixed and the second frame 221 to which the second bracket 432 is fixed to rotate relative to each other. The bracket connecting portion 433 may be provided as a combination of, for example, at least one shaft, at least one cam gear, and/or at least one compression spring that provides elasticity.

According to an embodiment, the first plate 441 may be positioned corresponding to the first frame 211, and the second plate 442 may be positioned corresponding to the second frame 221. The first plate 441 and the second plate 442 may have a first width in the direction (e.g., the x-axis direction) of the center line C of the foldable electronic device 2 that is relatively greater than a second width in the direction perpendicular to the first width direction. The first plate 441 and the second plate 442 may overlap with the hinge module 430. The first plate 441 and the second plate 442 may be coupled with the hinge module 430.

According to an embodiment, the first plate 441 and the second plate 442 may be connected to the bracket connecting portion 433 of the hinge module 430. The first plate 441 may include a first surface 441A provided corresponding to the third display area A3 of the first display module 24. The second plate 442 may include a second surface 442A provided corresponding to the third display area A3 of the first display module 24. In the unfolded state of the foldable electronic device 2 (see FIG. 2), the first surface 441A of the first plate 441 may support a portion of the third display area A3, and the second surface 442A of the second plate 442 may support a portion of the third display area A3. The first surface 441A of the first plate 441 may include a plane that may support one portion of the third display area A3 with respect to the center line C of the foldable electronic device 2 in the unfolded state of the foldable electronic device 2. The second surface 442A of the second plate 442 may include a plane that may support the other portion of the third display area A3 with respect to the center line C of the foldable electronic device 2 in the unfolded state of the foldable electronic device 2. In the unfolded state of the foldable electronic device 2, the first surface 441A of the first plate 441 and the second surface 442A of the second plate 442 may form an angle of substantially about 180 degrees and may be arranged without a substantial height difference. In the unfolded state of the foldable electronic device 2, even if an external force (e.g., an external pressure such as a touch input using a user's finger or a touch input using an electronic pen) is applied to the third display area A3, the third display area A3 may be maintained flat due to the support of the first plate 441 and the second plate 442.

According to an embodiment, the bracket connecting portion 433 of the hinge module 430 may include a center plate (not shown separately) aligned corresponding to the center line C of the foldable electronic device 2. In the unfolded state of the foldable electronic device 2, the center plate may support a portion corresponding to the gap between the first surface 441A of the first plate 441 and the second surface 442A of the second plate 442 in the third display area A3 of the first display module 24. The center plate may reduce or prevent a sagging or creasing phenomenon of a portion of the third area A3 corresponding to the gap between the first surface 441A of the first plate 441 and the second surface 442A of the second plate 442 in the unfolded state of the foldable electronic device 2.

According to an embodiment, when the foldable electronic device 2 transitions from the unfolded state (see FIG. 2) to the folded state (see FIG. 3), the hinge portion H may be configured to provide a space in which the third area A3 of the first display module 24 can be arranged in a bent form that can reduce bending stress. When the foldable electronic device 2 transitions from the unfolded state to the folded state, the hinge portion H may be configured to provide a space in which the third area A3 can be arranged in a bent form that can reduce buckling. In an embodiment, when the foldable electronic device 2 transitions from the unfolded state to the folded state, the third area A3 may be arranged in a water drop shape or a dumbbell shape that can reduce breakage or permanent deformation. In the folded state of the foldable electronic device 2, the third area A3 may be arranged in a bent form that can reduce the conflict (e.g., bending stress) between the compressive stress occurring in a portion of the third area A3 and the tensile stress occurring in a portion of the third area A3, based on the neutral plane inside the third area A3.

According to an embodiment, the second flexible printed circuit board 471 and the third flexible printed circuit board 472 may be arranged across the hinge portion H. The second flexible printed circuit board 471 and/or the third flexible printed circuit board 472 may electrically connect a first electrical component (e.g., the first printed circuit board 451) positioned on the first frame 211 and a second electrical component (e.g., the second printed circuit board 452) positioned on the second frame 221.

According to an embodiment, the third flexible printed circuit board 472 may be a flexible RF cable (FRC). The second printed circuit board 452 may include an antenna radiator or may be electrically connected to an antenna radiator included in the foldable electronic device 2. On the first printed circuit board 451, a wireless communication circuit (e.g., the wireless communication module 192 in FIG. 1) may be disposed. The wireless communication circuit may be electrically connected to the antenna radiator through the third flexible printed circuit board 472. The wireless communication circuit may transmit a radiated current (or a radio signal, an RF signal, or an electromagnetic signal) to the antenna radiator through the third flexible printed circuit board 472. The wireless communication circuit may process a signal (or an RF signal) transmitted or received through the antenna radiator.

According to an embodiment, the first internal support 481 may be positioned between the first cover 213 and the first support portion 411 of the first frame 211. The first internal support 481 may be coupled with the first support portion 411 through screw fastening. The first internal support 481 may cover and protect a component, such as the first printed circuit board 451 or the first battery 461, which is positioned between the first support portion 411 and the first cover 213.

According to various embodiments, the first internal support 481 may include a non-metallic material, and a conductive pattern used as an antenna radiator may be positioned or included in the first internal support 481.

According to various embodiments, the first frame 211 may be referred to as a 'first front case', and the first internal support 481 may be referred to as a 'first rear case'.

According to an embodiment, the second internal support 482 may be positioned between the second cover 223 and the second support portion 421 of the second frame 221. The second internal support 482 may be coupled with the second support portion 421 through screw fastening. The second internal support 482 may cover and protect a component, such as the second printed circuit board 452 or the second battery 462, positioned between the second support portion 421 and the second cover 223.

According to various embodiments, the second internal support 482 may include a non-metallic material, and a conductive pattern used as an antenna radiator may be positioned or included in the second internal support 482.

According to various embodiments, the second frame 221 may be referred to as a 'second front case', and the second internal support 482 may be referred to as a 'second rear case'.

According to an embodiment, the antenna structure 490 may be positioned at least in part between the second support portion 421 of the second frame 221 and the second cover 223. The antenna structure 490 may be implemented in a film form, such as a flexible printed circuit board, for example. The antenna structure 490 may include at least one conductive pattern utilized as a loop-shaped radiator. In an embodiment, the at least one conductive pattern may include a planar spiral conductive pattern (e.g., a planar coil or a pattern coil). The antenna structure 490 may be electrically connected to the first printed circuit board 451 through an electrical path such as a flexible printed circuit board. In an embodiment, the at least one conductive pattern included in the antenna structure 490 may be electrically connected to a communication circuit (e.g., the wireless communication module 192 in FIG. 1) disposed on the first printed circuit board 451. For example, the at least one conductive pattern may be utilized for short-range wireless communication such as near field communication (NFC). In another example, the at least one conductive pattern may be utilized for magnetic secure transmission (MST) that transmits and/or receives a magnetic signal. In an embodiment, the at least one conductive pattern included in the antenna structure 490 may be electrically connected to a power transmission/reception circuit disposed on the first printed circuit board 451. The power transmission/reception circuit may wirelessly receive or transmit power from or to an external electronic device, using the at least one conductive pattern included in the antenna structure 490. The power transmission/reception circuit may include a power management module, for example, a power management integrated circuit (PMIC) or a charger integrated circuit (IC). The power transmission/reception circuit may charge the first battery 461 and/or the second battery 462, using power wirelessly received through the conductive pattern.

According to an embodiment, the second display module 25 may be positioned in the internal space of the first housing 21, corresponding to the first cover 213. The first cover 213 may include a light-transmitting area (or opening) provided corresponding to the second display module 25. For example, the second display module 25 may be disposed on or coupled with the first internal support 481 and may be supported by the first internal support 481 to be positioned in the light-transmitting area (or opening) of the first cover 213. In various embodiments, the second display module 25 may be coupled with the first cover 213.

According to an embodiment, at least a part of a conductive portion included in the first frame 211 may be utilized as at least a part of an antenna radiator (or radiation unit). For example, at least a part of a conductive portion included in the first lateral area 412 may operate as at least a part of an antenna radiator (or radiation unit) that transmits (or radiates) an electromagnetic signal (or electromagnetic wave) to the outside or receives an electromagnetic signal from the outside.

According to an embodiment, at least a part of a conductive portion included in the second frame 221 may be utilized as at least a part of an antenna radiator (or radiation unit). For example, at least a part of a conductive portion included in the second lateral area 422 may operate as at least a part of an antenna radiator (or radiation unit) that transmits (or radiates) an electromagnetic signal (or electromagnetic wave) to the outside or receives an electromagnetic signal from the outside.

According to an embodiment, the first display module 24 may include a flexible display 240, a display driving circuit 2401, an extension portion 2402, and/or a first flexible printed circuit board 2403.

According to an embodiment, the flexible display 240 may provide a first area A1, a second area A2, and a third area A3.

According to an embodiment, the display driving circuit 2401 may serve as a signal path between the flexible display 240 and a processor (e.g., the processor 120 in FIG. 1) disposed on the first printed circuit board 451. The display driving circuit 2401 may control pixels through thin film transistors (TFTs) included in the flexible display 240. The display driving circuit 2401 may have, for example, a function to create a color difference by adjusting the amount of RGB (red, greed, blue) signals of a pixel. In various embodiments, the display driving circuit 2401 may be configured to operate in response to an RGBW (red, greed, blue, white) scheme that adds a white pixel to the RGB pixels. The display driving circuit 2401 may include, for example, a display drive integrated circuit (DDI) or a DDI chip.

According to various embodiments, the display driving circuit 2401 may be a DDI package. The display driving circuit 2401 may include a DDI (or DDI chip), a timing controller (T-CON), a graphic RAM (GRAM), or power penetrating circuits. In various embodiments, the graphic RAM may be omitted or implemented as a memory provided separately from the display driving circuit 2401. The timing controller may convert a data signal, input from a processor (e.g., the processor 120 in FIG. 1), into a signal required by the DDI. The timing controller may adjust the input data information into signals suitable for the gate driver (or gate IC) and source driver (or source IC) of the DDI. The graphic RAM may serve as a memory that temporarily stores data input to the driver (or IC) of the DDI. The graphic RAM may store the input signal and output it back to the driver of the DDI, and at this time, interact with the timing controller to process the signal. The power penetrating circuits may generate a voltage for driving the flexible display 240 and provide the voltage required for the gate driver and source driver of the DDI.

According to an embodiment, the display driving circuit 2401 may be positioned between the second area A2 of the flexible display 240 and the second support portion 421 of the second frame 221. The display driving circuit 2401 may be disposed on the flexible display 240 in, for example, a chip on panel (COP) scheme or a chip on film (COF) scheme.

According to an embodiment, the extension portion 2402 may extend from the flexible display 240. The extension portion 2402 may include electrical paths (e.g., wirings implemented with a conductive pattern) that electrically connect a plurality of TFTs included in the flexible display 240 and the first flexible printed circuit board 2403. The extension portion 2402, which is a portion not included in the display area, may not include pixels.

According to an embodiment, the extension portion 2402 may extend from a display panel included in the flexible display 240, and the display driving circuit 2401 may be disposed in the extension portion 2402 (e.g., COP scheme).

According to an embodiment, the extension portion 2402 may extend from the second area A2 of the flexible display 240. The extension portion 2402 may include a fourth area A4 disposed between the second support portion 421 of the second frame 221 and the second area A2 of the flexible display 240. An adhesive material or a bonding material may be disposed between the fourth area A4 of the extension portion 2402 and the second area A2 of the flexible display 240. The extension portion 2402 may include a bent portion B that extends from the second area A2 of the flexible display 240 to the fourth area A4. The display driving circuit 2401 may be disposed in the fourth area A4 of the extension portion 2402. In an embodiment, the display driving circuit 2401 may be disposed in the fourth area A4 of the extension portion 2402 through tape automated bonding (TAB).

According to an embodiment, one end of the first flexible printed circuit board 2403 may be electrically connected to the extension portion 2402. The extension portion 2402 and the first flexible printed circuit board 2403 may be connected, for example, through anisotropic conductive film (ACF) bonding. The ACF may be an anisotropic conductive layer made by mixing fine conductive particles (e.g., Ni, carbon, or solder balls) with an adhesive resin (or bonding resin) (e.g., a thermosetting resin) to form a film so that electricity can be conducted in only one direction. When the ACF is placed between the extension portion 2402 and the first flexible printed circuit board 2403 and then compressed by applying heat and pressure, a conductive pattern (not shown) provided (or formed) on the extension portion 2402 may be electrically connected to a conductive pattern formed (or provided) on the first flexible printed circuit board 2403 through the conductive particles, and the adhesive resin (or bonding resin) may bond the extension portion 2402 and the first flexible printed circuit board 2403. The other end of the first flexible printed circuit board 2403 may include a connector 2403a (e.g., an FPCB connector). The first flexible printed circuit board 2403 may pass through an opening (not shown) provided in the second support portion 421 of the second frame 221. The connector 2403a of the first flexible printed circuit board 2403 may be electrically connected to the second printed circuit board 452 disposed in the fourth support area 421B of the second support portion 421. The flexible display 240 may be electrically connected to the first printed circuit board 451 disposed in the first frame 211 through the extension portion 2402, the first flexible printed circuit board 2403, and the second flexible printed circuit board 471. A signal commanded from a processor (e.g., the processor 120 in FIG. 1) disposed on the first printed circuit board 451 may be transmitted to the display driving circuit 2401 through the first flexible printed circuit board 2403.

According to various embodiments, the extension portion 2402 may be a separate flexible film substrate (e.g., COF scheme) that electrically connects the display panel included in the flexible display 240 and the first flexible printed circuit board 2403.

According to various embodiments, the display driving circuit 2401 may be disposed on the first flexible printed circuit board 2403.

According to various embodiments, a touch sensor integrated circuit (IC) (not shown) electrically connected to a touch sensing circuit included in the flexible display 240 may be further disposed on the first flexible printed circuit board 2403. For example, the display driving circuit 2401 may include a touch display driver IC (TDDI).

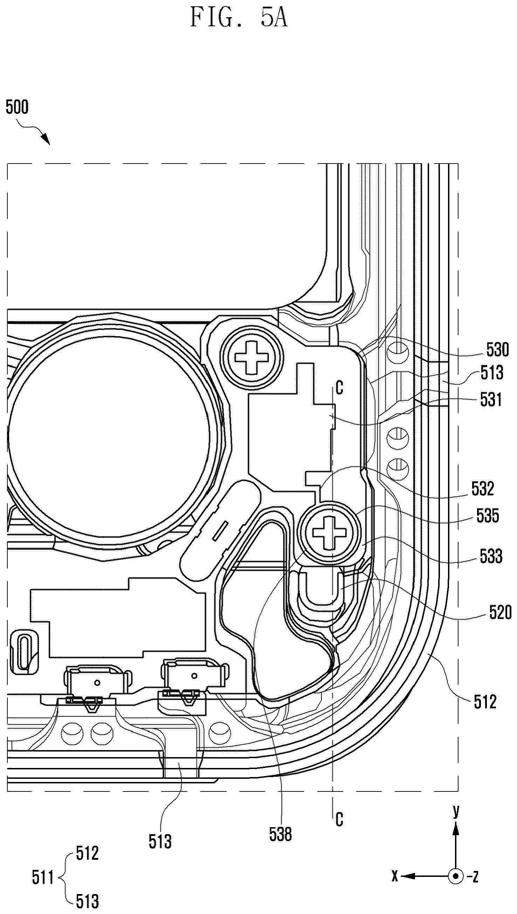

FIG. 5A is an enlarged plan view of an electronic device 500 according to various embodiments.

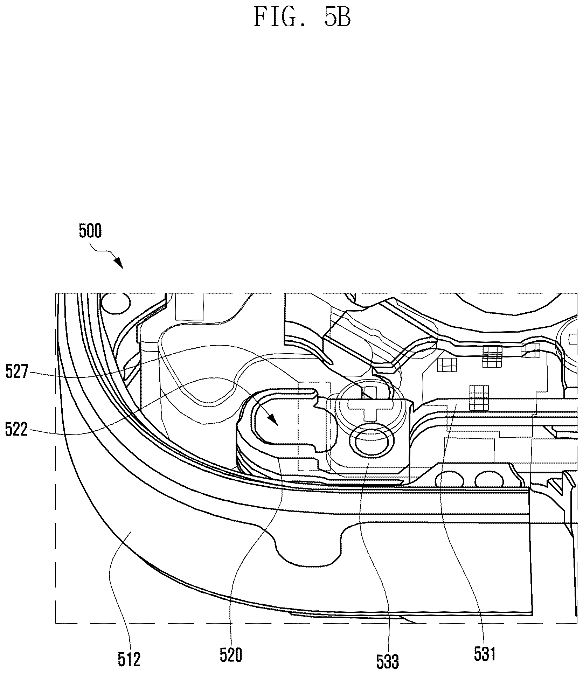

FIG. 5B is a perspective view of an electronic device 500 according to various embodiments.

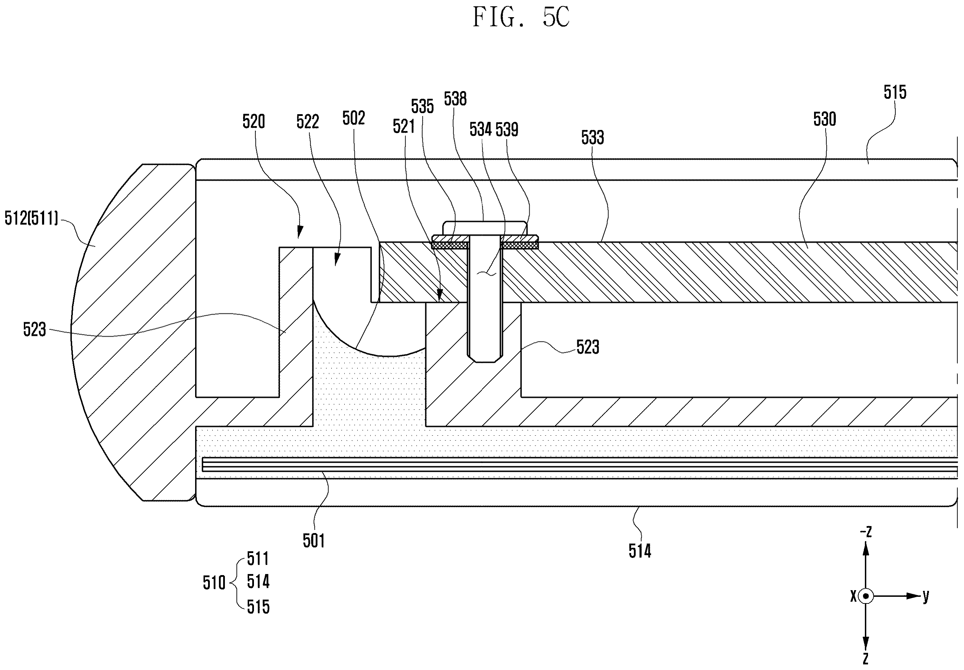

FIG. 5C is a cross-sectional view of an electronic device 500 according to various embodiments.

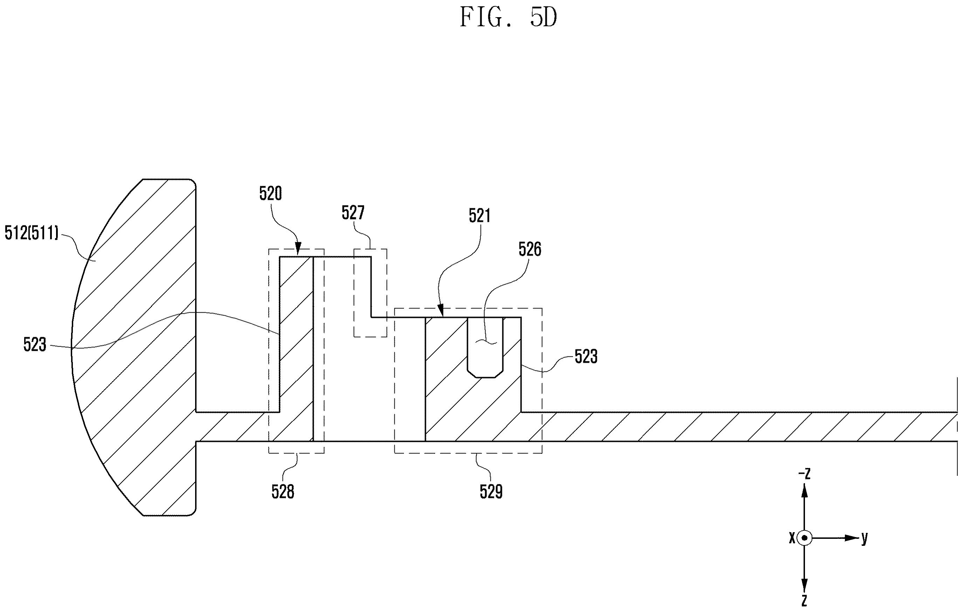

FIG. 5D is a cross-sectional view of a frame 511 of an electronic device 500 according to various embodiments.

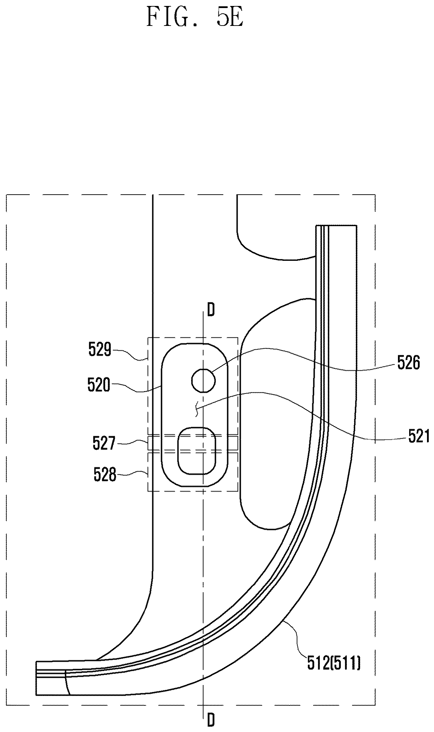

FIG. 5E is a plan view of a frame 511 of an electronic device 500 according to various embodiments.

FIGS. 5A and 5B are enlarged views of portion A of FIG. 3.

FIG. 5C is a cross-sectional view taken along the C-C direction of FIG. 5A.

FIG. 5D is a cross-sectional view taken along the D-D direction of FIG. 5E.

Referring to FIGS. 5A to 5C, the electronic device 500 (e.g., the electronic device 101 in FIG. 1 or the electronic device 2 in FIGS. 2 to 4) may include a housing 510 (e.g., the first housing 21 or the second housing 22 in FIGS. 2 to 4) and a substrate portion 530. In various embodiments, the housing 510 may include a front plate 514 (e.g., a display protection member or a display cover), a rear plate 515 (e.g., the first cover 213 or the second cover 223 in FIGS. 2 to 4), and a frame 511 (e.g., the first frame 211 or the second frame 221 in FIGS. 2 to 4), and may include an internal space surrounded by the front plate 514, the rear plate 515, and the frame 511. The front plate 514 and the rear plate 515 may be arranged to face each other, and coupled with the frame 511 in a first direction (e.g., the z-direction) and a second direction (e.g., the -z-direction) opposite to the first direction, respectively. In various embodiments, a display 501 of the electronic device 500 may be positioned on an inner surface of the front plate 514, and the frame 511 may be coupled with the display 501 and the front plate 514. In some embodiment, the electronic device 500 may not include the front plate 514 separately, and the frame 511 may be coupled with the display 501 positioned in the first direction. The frame 511 may be a member that protects the side surfaces (e.g., in the x-axis and y-axis directions) of the electronic device 500 and supports components such as the substrate portion 530 inside the electronic device 500.

In various embodiments, the electronic device 500 may include a waterproofing member 502. The waterproofing member 502 may prevent moisture and foreign substances from entering between the front plate 514 and the frame 511, and further prevent moisture from reaching the display 501. In various embodiments, the waterproofing member 502 may be a waterproofing gasket (e.g., a cure-in-place gasket (CIPG)) formed by injecting and curing a liquid resin into an area requiring waterproofing.

In various embodiments, the frame 511 may include a waterproofing member injection port 520. The waterproofing member injection port 520 may be an injection port formed to allow a liquid resin to be injected for forming the waterproofing member 502 during the manufacturing of the electronic device 500. The detailed shape of the waterproofing member injection port 520 will be described later.

The substrate portion 530 is located within the internal space of the housing 510 and may be a portion where various electrical components of the electronic device 500 (e.g., the processor 120, the memory 130, and/or the communication module 190 in FIG. 1) are disposed and a circuit electrically connected thereto is formed. The substrate portion 530 may include one or more printed circuit boards.

In various embodiments, the substrate portion 530 may include an RF circuit 531 (e.g., the wireless communication module 192 and the antenna module 197 in FIG. 1). The RF circuit 531 may be a circuit configured to transmit/receive and process radio frequency (RF) signals for wireless communication of the electronic device 500.

In various embodiments, the substrate portion 530 may include a substrate extension 533. The substrate extension 533 may be a part of the substrate portion 530 extending toward the frame 511. In various embodiments, the RF circuit 531 may be positioned adjacent to the substrate extension 533, and the substrate extension 533 may include a grounding circuit 532 formed to ground the RF circuit 531.

In various embodiments, the frame 511 may include at least one metal frame 512. The metal frame 512 may act as a radiating element for the RF circuit 531 of the substrate portion 530. For example, an antenna may be formed on at least some metal frames 512. Additionally, the metal frame 512 may provide a ground for the substrate portion 530. For example, the frame 511 may include a plurality of metal frames 512 and at least one segmented portion 513. The segmented portion 513 may include an insulating material (e.g., a polymer and/or a fiber-reinforced polymer) to couple the plurality of metal frames 512 together while insulating them from each other. In various embodiments, the metal frame 512 may include a feed hole formed to transmit an RF signal from the RF circuit 531. In various embodiments, the waterproofing member injection port 520 may be a part of the metal frame 512.

Referring to FIGS. 5C to 5E, in various embodiments, the waterproofing member injection port 520 of the frame 511 may include an opening 522 open in a second direction (e.g., the -z direction) and a sidewall 523 positioned along the outer periphery of the opening 522. The sidewall 523 may be a portion to prevent overflow of the liquid resin injected for waterproofing until it hardens.

In various embodiments, an upper surface of the sidewall 523 (e.g., a surface of the sidewall 523 in the -z direction) may form a seating surface 521. The seating surface 521 may be a portion formed in the waterproofing member injection port 520 to allow various components within the electronic device 500 to be mounted thereon. For example, the substrate extension 533 may extend to the waterproof member injection port 520, and the substrate extension 533 may be mounted on the seating surface 521. In another embodiment, another component of the electronic device 500, such as a magnet (e.g., a magnet that assists the folding operation of the foldable electronic device 500), may extend onto the seating surface 521. The height of the seating surface 521 may be substantially the same as the height of the component (e.g., the substrate extension 533) mounted on the seating surface 521. In some embodiments, the seating surface 521 may be formed on the entire upper surface of the sidewall 523. In other embodiments, the seating surface 521 may be formed on a part of the upper surface of the sidewall 523. This will be described later.

In various embodiments, the substrate extension 533 may be fastened to the waterproofing member injection port 520. For example, the substrate extension 533 may be fastened to the seating surface 521 by a fastening member 538 (or joining member), such as a screw, rivet, and/or a retaining clip. In some embodiments, the substrate extension 533 may include a through-hole 534 formed to allow the fastening member 538 to pass through. The waterproofing member injection port 520 (e.g., the seating surface 521) may have an engagement groove 526 formed therein. The engagement groove 526 may include, for example, a screw hole.

In various embodiments, the substrate extension 533 may include a grounding pad 535 formed around the through-hole 534. The grounding pad 535 may be a portion connected to the grounding circuit 532 to provide grounding to the substrate portion 530 (e.g., the RF circuit 531). In various embodiments, the grounding pad 535 may be grounded to the metal frame 512 via the fastening member 538. For example, when the fastening member 538 (e.g., a screw) electrically contacts the grounding pad 535 directly or indirectly and is engaged with the engagement groove 526 formed in the waterproofing member injection port 520, the grounding pad 535 may be electrically connected to the metal frame 512. Since the RF circuit 531 is grounded with respect to the metal frame 512 through the grounding pad 535 of the substrate extension 533 and the seating surface 521 of the waterproofing member injection port 520, the contact resistance of a grounding line is reduced and thus the radiation efficiency of the RF circuit 531 can be improved.

In various embodiments, the electronic device 500 may include a grounding washer 539 positioned between the fastening member 538 and the grounding pad 535. The grounding washer 539 electrically connects the grounding pad 535 and the fastening member 538, while reducing damage to the grounding pad 535 due to friction resulting from fastening the fastening member 538.

In various embodiments, a step portion 527 may be formed in the waterproofing member injection port 520. The waterproofing member injection port 520 may include a first portion 528 having a relatively greater height (e.g., a length extending in the -z direction) and a second portion 529 having a relatively smaller height, based on the step portion 527. In various embodiments, the seating surface 521 may be formed on the upper surface (e.g., a surface in the - z direction) of the second portion 529.

In the manufacture of the electronic device 500, both the display 501 and the front plate 514 are positioned on the frame 512, a liquid resin is injected through the waterproof member injection port 520 and cured to form the waterproof member 502, and then the substrate portion 530 may be assembled. In various embodiments, a part of the waterproof member 502 may be positioned within the waterproof member injection port 520. When the liquid resin is injected through the waterproof member injection port 520, a part of the resin is cured in a state of remaining in the waterproof member injection port 520, so a part of the waterproof member 502 may be positioned in the waterproof member injection port 520. In various embodiments, the waterproof member 502 may be eccentrically positioned in one direction within the waterproof member injection port 520. For example, the frame 512 of the housing 510 of the electronic device 500 may have a polygonal shape (including a polygon with some rounded corners; the same applies hereinafter) with multiple sides and comers, the waterproofing member injection port 520 may be positioned adjacent to one corner, and the waterproofing member 502 may be eccentrically positioned within the waterproofing member injection port 520 in a direction opposite to the direction where one side of the polygon extends (e.g., in a direction closer to the corner, the -y direction in the drawing). The eccentric positioning of the waterproofing member 502 may occur during the injection and curing of the liquid resin, resulting from the viscoelastic flow of the resin and its volume change during curing.

In various embodiments, the step portion 527 of the waterproofing member injection port 520 may be formed so that a portion of the waterproofing member injection port 520 where the waterproofing member 502 is eccentrically positioned becomes higher (e.g., extends further in the -z direction). The first portion 528, which is a relatively higher portion of the waterproofing member injection port 520, may be formed in such a portion where the waterproofing member 502 is eccentrically positioned, and the second portion 529 may be formed in a portion where the waterproofing member 502 is not eccentrically positioned. For example, the first portion 528 may be positioned in an opposite direction (e.g., the -y direction) to the direction in which one side of the housing 510 extends, and the second portion 529 may be positioned in a direction (e.g., the y direction) in which one side of the housing 510 extends. Since the eccentric positioning direction of the waterproofing member 502 can be predicted theoretically and/or experimentally, the step portion 527 may be formed to match the eccentric positioning direction of the waterproofing member 502.

The height of the sidewall 523 of the waterproofing member injection port 520 should be such that the liquid resin does not overflow when the waterproofing member 502 is injected. However, the waterproofing member injection port 520 takes up space within the electronic device 500, thereby reducing the space utilization rate of the electronic device 500 and acting as a factor that hinders miniaturization of the electronic device 500. Therefore, according to the disclosure, the height of the waterproofing member injection port 520 is lowered and the seating surface 521 is provided thereon to allow a component (e.g., the substrate portion 530) of the electronic device 500 to extend above the seating surface 521, thereby increasing the internal space utilization rate of the electronic device 500. In addition, by forming the step portion 527 in accordance with the eccentric positioning direction of the waterproofing member 502 and providing the seating surface 521 above the area (e.g., the second area) lowered by the step, the risk of liquid resin overflowing due to the lowering of the waterproofing member injection port 520 when the waterproofing member 502 is injected may be reduced.

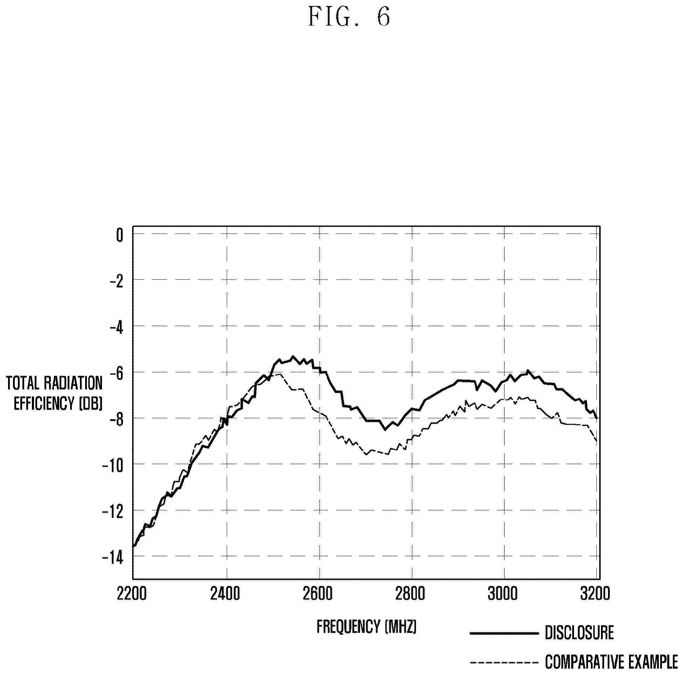

FIG. 6 is a graph illustrating the radiation efficiency of an electronic device 500 according to an embodiment of the disclosure.

A comparative example in FIG. 6 shows the radiation efficiency of an electronic device in which the grounding pad 535 of the circuit board is not connected to the metal frame 512 via the waterproofing member injection port 520.

Referring to FIG. 6, it can be seen that the electronic device 500 according to an embodiment of the disclosure has a radiation efficiency improved by at least 0.5 dB in a frequency band of 2500 MHz or higher compared to the comparative example. This may be because, according to the embodiment of the disclosure, the RF circuit 531 has reduced contact resistance as the grounding circuit 532 and the grounding pad 535 of the substrate extension 533, which extends over the waterproofing member injection port 520, provide low-resistance grounding to the seating surface 521 of the waterproofing member injection port 520 and the metal frame 512.

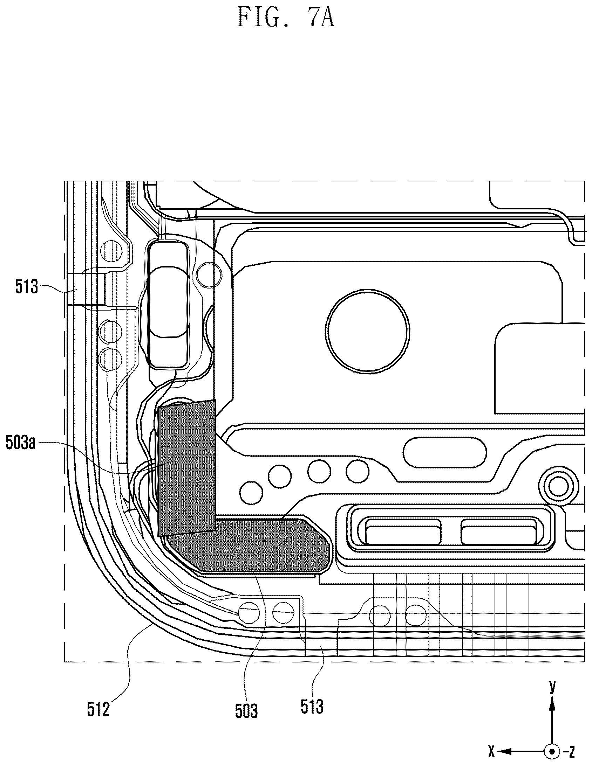

FIG. 7A is a plan view of an electronic device 500 according to various embodiments.

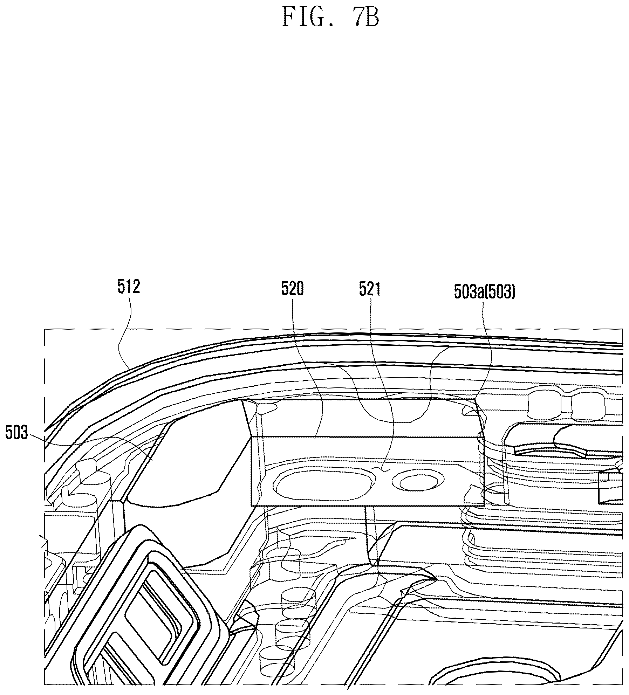

FIG. 7B is a perspective view of an electronic device 500 according to various embodiments.

FIGS. 7A and 7B are enlarged views of portion B of FIG. 3.

Referring to FIGS. 7A and 7B, the electronic device 500 may include a magnet 503. The magnet 503 may include, for example, a magnet for assisting the folding operation of a foldable type electronic device 500, a magnet for assisting the sliding operation of a rollable or slidable type electronic device 500, a magnet for assisting the mounting of various accessories of the electronic device 500, and/or a sensing magnet that provides information regarding the status of the electronic device 500 in combination with a Hall sensor.

In various embodiments, at least a portion of the magnet 503 may be positioned on the seating surface 521 of the waterproof member injection port 520. For example, the magnet 503 may include a magnet extension 503a that extends onto the seating surface 521 of the waterproof member injection port 520. In order to exert sufficient magnetic force for smooth operation of the magnet 503 of the electronic device 500, it is necessary to expand the area of the magnet 503. By extending the magnet 503 onto the seating surface 521 of the waterproof member injection port 520, the area of the magnet 503 can be effectively expanded within the limited internal space of the electronic device 500, thereby securing sufficient magnetic force.

According to various embodiments of the disclosure, an electronic device (500) includes:
a display (501); a housing including a frame (511) formed to be coupled with the display (501) in a first direction, and a rear plate (515) coupled with the frame (511) in a second direction opposite to the first direction; and a circuit board disposed inside the housing to have a first surface facing the first direction and a second surface facing the second direction. The frame (511) may include a waterproofing member injection port (520) through which a waterproofing member is injected in the first direction to seal between the display (501) and the frame (511). The waterproofing member injection port (520) may include an opening (522), a sidewall (523) formed on an outer periphery of the opening (522), and a seating surface (521) formed on at least a portion of a surface of the sidewall (523) facing the second direction. The circuit board may include a substrate extension (533) that at least partially overlaps with the seating surface (521) of the waterproofing member injection port (520), as viewed in the second direction.

In various embodiments, the electronic device may further include a fastening member (538) for securing the circuit board to the frame (511), the substrate extension (533) may include a through-hole (534) formed to allow the fastening member (538) to pass through, and the waterproofing member injection port (520) may include an engagement groove (526) formed at the periphery of the opening (522) to allow the fastening member (538) to be engaged.

In various embodiments, the substrate extension (533) may include a grounding pad (535) formed to be grounded with respect to the frame (511).

In various embodiments, the grounding pad (535) may be formed on a periphery of the through-hole (534).

In various embodiments, the electronic device may include a grounding washer (539) positioned between the fastening member (538) and the grounding pad (535), and electrically contacting the fastening member (538) and the grounding pad (535) by engagement of the fastening member (538) to electrically connect the grounding pad (535) and the fastening member (538).

In various embodiments, the frame (511) may include an antenna formed on at least one metal frame (512), and the electronic device may include an RF circuit (531) configured to supply power to the antenna, be disposed adjacent to the substrate extension (533), and be grounded through the grounding pad (535).

In various embodiments, the waterproofing member injection port (520) may include a first portion that is a relatively high portion based on the first direction, and a second portion that is a relatively low portion, and the seating surface (521) may be formed on an upper surface of the second portion, and has a step formed by a height difference between the first portion and the second portion.

In various embodiments, the frame (511) may have a polygonal shape, the waterproofing member injection port (520) may be formed at an inner corner of the frame (511), and the step (527) may be formed so that the second portion is positioned in a direction of at least one side of the polygonal shape of the frame (511).

In various embodiments, the waterproofing member may be eccentrically positioned toward the first portion within the waterproofing member injection port (520).

In various embodiments, the electronic device may further include a magnet (503) located within the housing, and the magnet (503) may extend onto the seating surface (521).

According to various embodiments of the disclosure, an electronic device (500) may include a front plate (514) disposed in a first direction; a rear plate (515) positioned parallel to the front plate (514); and a frame (511) coupled with the front plate (514) and the rear plate (515) and forming an internal space between the front plate (514) and the rear plate (515). The frame (511) may include a waterproofing member injection port (520) formed to allow a waterproofing member for sealing a space between the front plate (514) and the frame (511) to be injected in the first direction, and the waterproofing member injection port (520) may include an opening (522); a step (527) that forms a height difference from the front plate (514) based on the first direction in the opening (522); and a seating surface (521) provided on an upper surface of a portion having a low height.

In various embodiments, the electronic device may further include a substrate portion located in the internal space, and the substrate portion may include a substrate extension (533) extending onto the seating surface (521).

In various embodiments, the substrate extension (533) may include a grounding pad (535) formed to be grounded with respect to the frame (511).

In various embodiments, the frame (511) may include an antenna having at least one metal frame (511), and the substrate portion may include an RF circuit (531) configured to supply power to the antenna, be disposed adjacent to the substrate extension (533), and be grounded through the grounding pad (535).

In various embodiments, the electronic device may further include a fastening member (538) for securing the circuit board to the frame (511).

The substrate extension (533) may include a through-hole (534) formed to allow the fastening member (538) to pass through, and the waterproofing member injection port (520) may include an engagement groove (526) formed to allow the fastening member (538) to be engaged.

In various embodiments, the grounding pad (535) may be formed on a periphery of the through-hole (534).

In various embodiments, the electronic device may include a grounding washer (539) positioned between the fastening member (538) and the grounding pad (535), and electrically contacting the fastening member (538) and the grounding pad (535) by engagement of the fastening member (538) to electrically connect the grounding pad (535) and the fastening member (538).

In various embodiments, the frame (511) may have a polygonal shape, the waterproofing member injection port (520) may be positioned adjacent to a corner of the polygonal shape of the frame (511) in the internal space, and the step (527) may be formed so that a height difference occurs in a direction in which one side of the polygonal shape of the frame (511) extends.

In various embodiments, the waterproofing member may be eccentrically positioned in one direction within the waterproofing member injection port (520), and the step portion (527) may be formed such that a portion of the waterproofing member injection port (520) where the waterproofing member is eccentrically positioned has an increased height.

In various embodiments, the electronic device may further include a magnet (503) located within the internal space, and the magnet (503) may extend onto the seating surface (521).

The embodiments of the disclosure disclosed in this specification and drawings are merely specific examples presented to easily explain the technical contents according to the embodiments of the disclosure and to help understand the embodiments of the disclosure, and are not intended to limit the scope of the embodiments of the disclosure. Therefore, the scope of the various embodiments of the disclosure should be interpreted as including all changes or modified forms derived based on the technical ideas of the various embodiments of the disclosure in addition to the embodiments disclosed herein.

## Claims

1. An electronic device (500) comprising:
a display (501);
a housing including a frame (511) formed to be coupled with the display (501) in a first direction, and a rear plate (515) coupled with the frame (511) in a second direction opposite to the first direction; and
a circuit board disposed inside the housing to have a first surface facing the first direction and a second surface facing the second direction,
wherein the frame (511) includes a waterproofing member injection port (520) through which a waterproofing member is injected in the first direction to seal between the display (501) and the frame (511),
wherein the waterproofing member injection port (520) includes an opening (522), a sidewall (523) formed on an outer periphery of the opening (522), and a seating surface (521) formed on at least a portion of a surface of the sidewall (523) facing the second direction, and
wherein the circuit board includes a substrate extension (533) that at least partially overlaps with the seating surface (521) of the waterproofing member injection port (520), as viewed in the second direction.

2. The electronic device of claim 1, further comprising:
a fastening member (538) for securing the circuit board to the frame (511),
wherein the substrate extension (533) includes a through-hole (534) formed to allow the fastening member (538) to pass through, and
wherein the waterproofing member injection port (520) includes an engagement groove (526) formed at the periphery of the opening (522) to allow the fastening member (538) to be engaged.

3. The electronic device of claim 2, wherein the substrate extension (533) includes a grounding pad (535) formed to be grounded with respect to the frame (511), and
The electronic device of claim 3, wherein the grounding pad (535) is formed on a periphery of the through-hole (534).

4. The electronic device of claim 3, wherein the electronic device comprises a grounding washer (539) positioned between the fastening member (538) and the grounding pad (535), and electrically contacting the fastening member (538) and the grounding pad (535) by engagement of the fastening member (538) to electrically connect the grounding pad (535) and the fastening member (538).

5. The electronic device of claim 3, wherein the frame (511) includes an antenna formed on at least one metal frame (512), and
wherein the electronic device comprises an RF circuit (531) configured to supply power to the antenna, be disposed adjacent to the substrate extension (533), and be grounded through the grounding pad (535).

6. The electronic device of claim 1, wherein the waterproofing member injection port (520) includes a first portion that is a relatively high portion based on the first direction, and a second portion that is a relatively low portion, and
wherein the seating surface (521) is formed on an upper surface of the second portion, and has a step formed by a height difference between the first portion and the second portion.

7. The electronic device of claim 6, wherein the frame (511) has a polygonal shape,
wherein the waterproofing member injection port (520) is formed at an inner corner of the frame (511), and
wherein the step (527) is formed so that the second portion is positioned in a direction of at least one side of the polygonal shape of the frame (511).

8. The electronic device of claim 6, wherein the waterproofing member is eccentrically positioned toward the first portion within the waterproofing member injection port (520).

9. The electronic device of claim 1, further comprising:
a magnet (503) located within the housing,
wherein the magnet (503) extends onto the seating surface (521).

10. An electronic device (500) comprising:
a front plate (514) disposed in a first direction;
a rear plate (515) positioned parallel to the front plate (514); and
a frame (511) coupled with the front plate (514) and the rear plate (515) and forming an internal space between the front plate (514) and the rear plate (515),
wherein the frame (511) includes a waterproofing member injection port (520) formed to allow a waterproofing member for sealing a space between the front plate (514) and the frame (511) to be injected in the first direction, and
wherein the waterproofing member injection port (520) includes:
an opening (522);
a step (527) that forms a height difference from the front plate (514) based on the first direction in the opening (522); and
a seating surface (521) provided on an upper surface of a portion having a low height.

11. The electronic device of claim 10, further comprising:
a substrate portion located in the internal space,
wherein the substrate portion includes a substrate extension (533) extending onto the seating surface (521), and
wherein the substrate extension (533) includes a grounding pad (535) formed to be grounded with respect to the frame (511).

12. The electronic device of claim 11, wherein the frame (511) includes an antenna having at least one metal frame (511), and
wherein the substrate portion includes an RF circuit (531) configured to supply power to the antenna, be disposed adjacent to the substrate extension (533), and be grounded through the grounding pad (535).

13. The electronic device of claim 12, further comprising:
a fastening member (538) for securing the circuit board to the frame (511),
wherein the substrate extension (533) includes a through-hole (534) formed to allow the fastening member (538) to pass through, and
wherein the waterproofing member injection port (520) includes an engagement groove (526) formed to allow the fastening member (538) to be engaged.

14. The electronic device of claim 10, wherein the frame (511) has a polygonal shape,
wherein the waterproofing member injection port (520) is positioned adjacent to a corner of the polygonal shape of the frame (511) in the internal space, and
wherein the step (527) is formed so that a height difference occurs in a direction in which one side of the polygonal shape of the frame (511) extends.

15. The electronic device of claim 10, wherein the waterproofing member is eccentrically positioned in one direction within the waterproofing member injection port (520), and
wherein the step (527) is formed such that a portion of the waterproofing member injection port (520) where the waterproofing member is eccentrically positioned has an increased height.
